# EUROPÄISCHE PATENTANMELDUNG

(11) **EP 3 517 344 A1**
(43) Veröffentlichungstag der Anmeldung: **31.07.2019**
(21) Anmeldenummer: 18153240.9
(22) Anmeldetag: 24.01.2018
(51) Int. Cl.: B60L 13/03, H02K 41/03, H02K 11/215

(54) **TRANSPORTEINHEIT FÜR EINEN LANGSTATORLINEARMOTOR**

(71) Anmelder: B&R Industrial Automation GmbH, 5142 Eggelsberg (AT)
(72) Erfinder: Forthuber, Friedrich, 5144 Handenberg (AT)
(74) Vertreter: Patentanwälte Pinter & Weiss OG

(57) **Zusammenfassung**

Um eine Transporteinheit für einen Langstatorlinearmotor anzugeben, deren Orientierung, bei betriebsgemäßer Verwendung am Langstatorlinearmotor einfach bestimmbar ist, weist die Transporteinheit (1) erfindungsgemäß eine erste Führungsseite (FS1) auf, an der eine erste Führungsgruppe (G1) angeordnet ist, und eine zweite Führungsseite (FS2) auf, an der eine zweite Führungsgruppe (G2) angeordnet ist. Eine hinsichtlich der Längsrichtung (x) seitlich befindliche erste Magnetseite (S1) befindet sich gegenüber einer zweiten Magnetseite (S2) wobei die erste Magnetseite (S1) in einem ersten Prüfabstand (a1) ausgehend von der Mitte der ersten Längsausdehnung (l1) in Richtung des ersten Endes (l1e) eine magnetische Größe mit einem ersten Wert (w1) aufweist, und an der ersten Magnetseite (S1) im ersten Prüfabstand (a1) ausgehend von der Mitte der ersten Längsausdehnung (l1) in Richtung des ersten Anfangs (l1a) eine magnetische Größe mit einem zweiten Wert (w2), der dem ersten Wert (w1) entspricht, aufweist. Die Transporteinheit (1) weist an der zweiten Magnetseite (S2) in einem zweiten Prüfabstand (a2) ausgehend von der Mitte der zweiten Längsausdehnung (l2) in Richtung des zweiten Endes (l2e) eine magnetische Größe mit einem dritten Wert (w3) auf und im zweiten Prüfabstand (a2) ausgehend von der Mitte der zweiten Längsausdehnung (l2) in Richtung des zweiten Anfangs (l2a) eine magnetische Größe mit einem vierten Wert (w4), der dem dritten Wert (w3) entspricht, wobei sich der erste und zweite Wert (w1, w2) von dem dritten und vierten Wert (w3, w4) unterscheiden.

## Beschreibung

Die gegenständliche Erfindung betrifft eine Transporteinheit für einen Langstatorlinearmotor, wobei die Transporteinheit eine hinsichtlich einer Längsrichtung seitlich befindliche erste Führungsseite aufweist, an der eine führungssymmetrische erste Führungsgruppe angeordnet ist und die Transporteinheit eine hinsichtlich der Längsrichtung seitlich befindliche erste Magnetseite aufweist, die sich entlang der Längsrichtung über eine erste Längsausdehnung von einem ersten Anfang bis zu einem ersten Ende erstreckt.

Die gegenständliche Erfindung betrifft zudem eine Transporteinheit für einen Langstatorlinearmotor, wobei die Transporteinheit eine hinsichtlich einer Längsrichtung seitlich befindliche erste Führungsseite aufweist, an der eine erste Führungsgruppe angeordnet ist, eine hinsichtlich der Längsrichtung seitlich befindliche erste Magnetseite aufweist, die sich entlang der Längsrichtung über eine erste Längsausdehnung von einem ersten Anfang bis zu einem ersten Ende erstreckt, die Transporteinheit eine der Längsrichtung seitlich befindliche zweiten Führungsseite aufweist, an der eine zweite Führungsgruppe angeordnet ist und die Transporteinheit eine hinsichtlich der Längsrichtung seitlich befindliche zweite Magnetseite aufweist, die sich entlang der Längsrichtung über eine zweite Längsausdehnung von einem zweiten Anfang bis zu einem zweiten Ende erstreckt,

Die gegenständliche Erfindung betrifft auch eine Transporteinheit für einen Langstatorlinearmotor, wobei die Transporteinheit eine hinsichtlich einer Längsrichtung seitlich befindliche erste Führungsseite aufweist, an der eine erste Führungsgruppe angeordnet ist, eine zumindest der Längsrichtung seitlich befindliche zweiten Führungsseite aufweist, an der eine zweite Führungsgruppe angeordnet ist, wobei sich die zweite Führungsseite gegenüber der ersten Führungsseite befindet und die zweite Führungsgruppe führungsäquivalent zur ersten Führungsgruppe ausgestaltet ist, eine hinsichtlich der Längsrichtung seitlich befindliche erste Magnetseite aufweist, die sich entlang der Längsrichtung über eine erste Längsausdehnung von einem ersten Anfang bis zu einem ersten Ende erstreckt, eine hinsichtlich der Längsrichtung seitlich befindliche zweite Magnetseite aufweist, die sich entlang der Längsrichtung über eine zweite Längsausdehnung von einem zweiten Anfang bis zu einem zweiten Ende erstreckt, wobei die Mitte der ersten Längsausdehnung und die Mitte der zweiten Längsausdehnung gegenüber voneinander befinden.

Weiters betrifft die gegenständliche Erfindung ein Verfahren zum Bestimmen der Orientierung einer Transporteinheit eines Langstatorlinearmotors, wobei die Transporteinheit in Längsrichtung führungssymmetrisch und/oder führungsäquivalent ist.

Bei einem Langstatorlinearmotor (LLM) sind eine Vielzahl von nebeneinander angeordneten elektrischen Antriebsspulen ortsfest entlang einer Transportstrecke angeordnet, wobei die Antriebsspulen, einen Stator bilden. Auf einer Transporteinheit ist eine Anzahl von Magneten als Permanentmagnete oder als elektrische Spule bzw. als Kurzschlusswicklung angeordnet. Die Magnete sind üblicherweise derart in Bewegungsrichtung auf der Transporteinheit angebracht, dass sie mit den Antriebsspulen des Stators zusammenwirken können. Der Langstatorlinearmotor kann als Synchronmaschine, sowohl selbsterregt oder fremderregt, oder als Asynchronmaschine ausgeführt sein. Durch das Zusammenwirken der (elektro)magnetischen Felder der Magnete und der Antriebsspulen wirkt eine Vortriebskraft auf die Magnete der Transporteinheit, womit wiederum die Transporteinheit in Bewegungsrichtung bewegt wird. Dies erfolgt durch Ansteuerung der einzelnen Antriebsspulen zur Regelung des magnetischen Flusses, durch welchen die Größe der Vortriebskraft beeinflusst wird. Es werden vermehrt Langstatorlinearmotoren als Ersatz für konventionelle Stetigförderer bzw. rotativ-zu-linear Übersetzungseinheiten (z.B. rotativer Motor an Förderband, Riemen, Ketten etc.) eingesetzt, um den Anforderungen moderner, flexibler Logistikeinheiten gerecht zu werden.

In der Regel werden solche Langstatorlinearmotoren meist in einer Ebene angeordnet, sodass die Transporteinheiten entlang einer ebenen Transportstrecke bewegt werden. Die Transportstrecke kann dabei aus Transportsegmenten in Form von Kurvensegmenten, Geraden oder auch Weichen zusammengesetzt sein. Eine Transporteinheit muss natürlich auf geeignete Weise entlang der Transportstrecke geführt und an dieser gehalten werden. Dazu sind an der Transporteinheit aus einzelnen Führungselementen bestehende Führungsgruppen vorgesehen, die mit an der Transportstrecke vorgesehenen Streckenführungsgruppen zusammenwirken, die sich wiederum aus Strecken-Führungselementen zusammensetzen. Eine Führungsgruppe kann natürlich auch nur aus einem Führungselement bestehen. Hierbei können an sich beliebige Führungselemente und Strecken-Führungselemente, wie beispielsweise Rollen, Räder, Gleitelemente, Führungsflächen, usw., zum Einsatz kommen. Die US 9,428,347 B2 beschreibt beispielsweise einen Langstatorlinearmotor, der eine Transporteinheit mit seitlich angebrachten Führungsrädern aufweist, die auf zugeordneten Führungsflächen an der Transportstrecke abrollen. Um die Transporteinheit an der Transportstrecke zu halten, wird die Magnetkraft der Antriebsmagnete an der Transporteinheit genutzt. Die WO 2012/101004 A1 beschreibt einen Langstatorlinearmotor mit einer Transporteinheit, die in Bewegungsrichtung entlang der Transportstrecke mechanisch zwangsgeführt ist, d.h., dass das Transportfahrzeuge nur in diese eine Bewegungsrichtung bewegt werden kann. Damit sind die Führung und das Halten des Transportfahrzeuges immer gewährleistet. In der WO 2015/042409 A1 wird die sichere Führung des Transportfahrzeuges entlang der Transportstrecke dadurch sichergestellt, dass jeweils Führungsgruppen an zwei Führungsseiten vorhanden sind. An der Transportstrecke sind jeweils eine erste und eine zweite Strecken-Führungsgruppe vorgesehen, die mit den Führungselementen der ersten bzw. zweiten Führungsgruppen der Transporteinheit zusammenwirken. Damit ist das Transportfahrzeug in Bewegungsrichtung immer sicher geführt und ein Herunterfallen von der Transportstrecke praktisch unmöglich.

Es kann vorkommen, dass durch die Gestaltung der Transportstrecke, insbesondere bei einem Transport über Weichen, die Orientierungen der Transporteinheiten gegenüber den ortsfesten Antriebsspulen verdreht werden, z.B. um 180° um die Längs- oder die Querachse. Es ist grundlegend Verdrehung der Orientierung um praktisch jede Achse denkbar, sofern dies durch die Transporteinheit und die Transportstrecke baulich möglich ist. Auch kann bei der Montage der Transporteinheit auf dem Stator die Transporteinheit irrtümlich gegenüber der gewünschten oder angedachten Orientierung verdreht platziert werden. Eine Erkennung einer korrekten Standardorientierung oder einer Falschorientierung von Transporteinheiten auf der Transportstrecke ist bislang jedoch nicht möglich. Die WO 2010/085670 A1 und WO 2014/047104 A1 offenbaren jeweils einen Langstatorlinearmotor mit einer Weiche und Transporteinheiten, die jeweils drei Magnete pro Seite aufweisen, wobei pro Führungsgruppe je zwei Führungselemente mit jeweils zugehörigen Strecken-Führungsgruppen zusammenwirken. Eine Polung der Antriebsmagnete wird dabei nicht näher beschrieben. Die EP 3 044 373 A1 offenbart ebenso einen Langstatorlinearmotor mit einer Weiche, jedoch mit jeweils 6 Antriebsmagneten auf jeder Seite der Transporteinheiten.

Es ist eine Aufgabe der gegenständlichen Erfindung eine Transporteinheit für einen Langstatorlinearmotor anzugeben, deren Orientierung, bei betriebsgemäßer Verwendung am Langstatorlinearmotor, einfach bestimmbar ist, sowie ein Verfahren anzugeben um die Orientierung einer Transporteinheit zu bestimmen.

Diese Aufgabe wird gelöst indem die Transporteinheit an der ersten Magnetseite in einem ersten Prüfabstand ausgehend von der Mitte der ersten Längsausdehnung in Richtung des ersten Endes eine magnetische Größe mit einem ersten Wert aufweist, und an der ersten Magnetseite im ersten Prüfabstand ausgehend von der Mitte der ersten Längsausdehnung in Richtung des ersten Anfangs eine magnetische Größe mit einem zweiten Wert aufweist, der sich vom ersten Wert unterscheidet. Die erste Führungsgruppe befindet sich an der ersten Führungsseite, kann sich aber auch beispielsweise über zwei oder auch mehrere Seiten der Transporteinheit erstrecken. Die Bewegungsrichtung der Transporteinheit wird als Längsrichtung bezeichnet, eine quer dazu liegende Richtung als Querrichtung. Eine sich im Sinne einer Rechtschraube aus der Längsrichtung und der Querrichtung ergebende Richtung wird als Höhenrichtung angesehen. Der Ursprung dieses kartesischen Koordinatensystems wird in das Zentrum eines Grundkörpers der jeweiligen Transporteinheit gelegt, womit das Koordinatensystem jeweils mit den Transporteinheiten mitbewegt, bei einer Rotation jedoch nicht mitgedreht, wird. "Seitlich angeordnet" bezieht sich somit in Bezug auf den Ursprung und bedeutet, dass ein Versatz in Querrichtung und/oder Höhenrichtung vorliegt. Es ist somit grundlegend unwesentlich ob sich die Führungsseite an der Transporteinheit ausgehend vom Ursprung in Querrichtung und/oder in der Höhenrichtung befindet. Wesentlich ist es, dass die erste Führungsgruppe führungssymmetrisch ist. Führungssymmetrisch bedeutet einerseits, dass die Führungsgruppe geeignet ist mit einer ersten Strecken-Führungsgruppe einer Transportstrecke eines Langstatorlinearmotors zusammenzuwirken um eine Bewegung der Transporteinheit in die jeweilige Bewegungsrichtung, also hier entlang der Längsrichtung, zu ermöglichen. Andererseits bedeutet eine Führungssymmetrie eines Führungselements jedoch auch, dass das Führungselement nach einer Rotation der Transporteinheit um 180° um eine entlang der Querrichtung liegende Achse weiterhin mit der ersten Strecken-Führungsgruppe der Transportstrecke zusammenzuwirken kann, um eine Bewegung der rotierten Transporteinheit in die Längsrichtung zu ermöglichen.

Besteht eine Führungsgruppe beispielsweise nur aus einem auf der Führungsseite angebrachten Führungselement, z.B. einer Rolle, die mit einem Strecken-Führungselement einer Strecken-Führungsgruppe, z.B. in Form einer Schiene, zusammenwirkt, so ermöglicht dieses Führungselement eine Führung in die Bewegungsrichtung. Die Führungsgruppe muss jedoch auch eine Führung in der jeweiligen Längsrichtung nach einer Rotation um 180 Grad um die Querrichtung, erlauben, um führungssymmetrisch zu sein. Dies ist bei einer Rolle als alleiniges Führungselement einer Führungsgruppe grundlegend gegeben, insbesondere wenn diese hinsichtlich der Höhenrichtung zentral an der Transporteinheit angeordnet ist. Ist die Rolle hinsichtlich der Höhenrichtung jedoch nicht zentral, d.h. auf Höhe des Ursprungs, angeordnet, so wird ist die Transporteinheit nach einer Rotation um 180 Grad um die Querrichtung in der Höhenrichtung versetzt auf der Transportstrecke geführt. Damit ist die Transporteinheit zwar grundlegend führungssymmetrisch, dieser mögliche Versatz muss jedoch bei der baulichen Ausgestaltung des Langstatorlinearmotors berücksichtigt werden und kann auch unerwünscht sein.

Besteht die Führungsgruppe aus einem Führungselement in Form einer ersten Rolle, die in einem ersten Abstand in positiver Höhenrichtung über der Transporteinheit angebracht ist und einem Führungselement in Form einer gleichartigen zweiten Rolle, die im gleichen Abstand in negativer Höhenrichtung angebracht ist, so ist seitens der Führungsgruppe eine Führungssymmetrie gegeben. Natürlich muss auch die Transporteinheit selbst baulich eine Rotation um die Querrichtung ermöglichen. Es muss zudem die zugehörige Strecken-Führungsgruppe, die in diesem Fall beispielsweise aus Strecken-Führungselementen in Form einer ersten Schiene in positiver und einer gleichartigen zweiten Schiene in negativer Höhenrichtung besteht, jeweils mit den Rollen bei "normal" orientierter Transporteinheit und bei entlang der Längsrichtung um 180 Grad verdrehter Transporteinheit zusammenwirken können. Das bedeutet, dass die Streckenführungsgruppen natürlich ebenso führungssymmetrisch sein müssen. Wären die Rollen und zugehörigen Schienen in positiver und negativer Höhenrichtung nicht jeweils austauschbar zueinander kompatibel (das muss nicht zwingend bedeuten, dass sie identisch aufgebaut sind), so sind sie nicht führungssymmetrisch, obwohl eine Führung in Längsrichtung möglich ist-jedoch nicht nach einer Rotation der Transporteinheit um 180 Grad in Längsrichtung.

Die Aufgabe wird ebenso durch ein erfindungsgemäßes Verfahren gelöst, bei dem an einer hinsichtlich der Längsrichtung seitlich befindlichen Magnetseite an einem Prüfpunkt ein Ist-Wert einer magnetische Prüfgröße ermittelt und mit einem Referenzwert verglichen wird und bei Nicht-Übereinstimmung des Ist-Werts mit dem Referenzwert auf eine Falschorientierung der Transporteinheit geschlossen wird. Das bedeutet, dass bei Übereinstimmung des Ist-Werts mit dem Referenzwert auf eine korrekte Standardorientierung der Transporteinheit geschlossen wird. Es kann bei Detektion einer Falschorientierung beispielsweise ein Signal ausgegeben werden.

Das erfindungsgemäße Verfahren ermöglicht in einfacher Weise eine Prüfung der Orientierung der Transporteinrichtung in Bezug auf eine Transportstrecke, d.h. ob sich die Transporteinheit in Standardorientierung befindet oder ob sie um 180 Grad um eine in Querrichtung liegende Achse gedreht wurde. Voraussetzung hierzu ist natürlich eine Führungssymmetrie. Um eine Orientierung abweichend von der Standardorientierung zu erkennen, muss der Referenzwert der magnetischen Prüfgröße, der dem in Standardorientierung erwarteten Ist-Wert der Prüfgröße am jeweiligen Prüfpunkt entspricht, bekannt sein, um ihn mit einem ermittelten, tatsächlichen Ist-Wert der magnetischen Prüfgröße an diesem Prüfpunkt vergleichen zu können. Stimmt der Ist-Wert der magnetischen Prüfgröße nicht mit dem Referenzwert überein, so kann davon ausgegangen werden, dass die Transporteinheit um eine in Querrichtung liegende Achse verdreht ist.

Das erfindungsgemäße Verfahren kann bei erfindungsgemäßen Transporteinheiten verwendet werden, wenn der Prüfpunkt dem Prüfabstand entspricht. Es wird also grundlegend festgestellt, ob der Prüfpunkt dem Prüfabstand in positiver Längsrichtung, d.h. in Bewegungsrichtung, oder dem Prüfabstand in negativer Längsrichtung, d.h. gegen die Bewegungsrichtung, befindet. Somit würde der Referenzwert beispielsweise der magnetischen Prüfgröße dem ersten Wert (im ersten Prüfabstand in Richtung des ersten Endes) entsprechen. Ist der Ist-Wert mit dem Referenzwert identisch, so befindet sich die Transporteinheit in Standardorientierung. Entspricht der Ist-Wert dem zweiten Wert (im ersten Prüfabstand in Richtung des ersten Anfangs), und damit nicht dem ersten Wert, so befindet sich die Transporteinheit in Falschorientierung.

Bei der Bestimmung der Orientierung der Transporteinheit wird also ein Ist-Wert der magnetischen Prüfgröße an einem Prüfpunkt ermittelt, wobei sich die Transporteinheit an der Transportstrecke befindet. Dabei kann wie soeben beschrieben die Prüfgröße der magnetischen Größe entsprechen, womit der Referenzwert dem Wert und in Standardorientierung auch dem Ist-Wert entspricht. Der Prüfgröße kann aber auch durch den magnetischen Kreis, welcher durch die Antriebsspulen der Transportstrecke gemeinsam mit den Magneten und/oder magnetisch leitfähige Materialien (z.B. Magnetplatten) der Transporteinheit gebildet wird, entstehen. Es kann demnach auch eine Prüfgröße, die nicht der magnetischen Größe entspricht, ermittelt werden. Dabei müssen natürlich der Ist-Wert der Prüfgröße und der Wert der magnetischen Größe miteinander korrelieren, d.h. auseinander ableitbar sein. Statt Ist-Werten können natürlich auch Verläufe beobachtet und mit Referenzverläufen verglichen werden.

Diese Prüfung des Ist-Werts der magnetischen Prüfgröße zur Ermittlung einer Drehung um eine in Querrichtung liegende Achse kann unabhängig davon erfolgen ob eine zweite Anzahl Magnete auf einer zweiten Magnetseite vorhanden ist oder nicht.

Die Aufgabe wird auch durch eine Transporteinheit gelöst, die eine erste Führungsgruppe und eine zweite Führungsgruppe aufweist, welche führungssymmetrisch und/oder zueinander führungsäquivalent sind, wobei die Transporteinheit an der ersten Magnetseite in einem ersten Prüfabstand ausgehend von der Mitte der ersten Längsausdehnung in Richtung des ersten Endes eine magnetische Größe mit einem ersten Wert aufweist, die Transporteinheit an der ersten Magnetseite im ersten Prüfabstand ausgehend von der Mitte der ersten Längsausdehnung in Richtung des ersten Anfangs eine magnetische Größe mit einem zweiten Wert aufweist, der sich vom ersten Wert unterscheidet, die Transporteinheit an der ersten Magnetseite in einem ersten Prüfabstand ausgehend von der Mitte der ersten Längsausdehnung in Richtung des ersten Endes eine magnetische Größe mit einem ersten Wert aufweist, die Transporteinheit an der ersten Magnetseite im ersten Prüfabstand ausgehend von der Mitte der ersten Längsausdehnung in Richtung des ersten Anfangs eine magnetische Größe mit einem zweiten Wert (aufweist, der sich vom ersten Wert unterscheidet, wobei die Transporteinheit an der zweiten Magnetseite in einem zweiten Prüfabstand ausgehend von der Mitte der zweiten Längsausdehnung in Richtung des zweiten Endes eine magnetische Größe mit einem dritten Wert aufweist, und die Transporteinheit an der zweiten Magnetseite im zweiten Prüfabstand ausgehend von der Mitte der zweiten Längsausdehnung in Richtung des zweiten Anfangs eine magnetische Größe mit einem vierten Wert aufweist, der sich vom dritten Wert unterscheidet.

Sind die beiden Führungsgruppen jeweils führungssymmetrisch, so kann durch das oben beschriebene erfindungsgemäße Verfahren an der zweiten Magnetseite analog zur ersten Magnetseite zusätzlich oder stattdessen durch eine Prüfung des Ist-Werts der magnetischen Prüfgröße am Prüfpunkt festgestellt werden. Dabei entspricht der Prüfpunkt wieder dem Prüfabstand ausgehend von der Mitte der Längsausdehnung. Stimmen Ist-Wert und Referenzwert überein, so kann davon ausgegangen werden, dass sich die Transporteinheit in Standardorientierung befindet. Stimmen sie nicht überein, so kann davon ausgegangen werden, dass die Transporteinheit um 180 Grad um eine in Querrichtung liegende Achse gedreht wurde. Voraussetzung ist natürlich immer, dass ein Referenzwert der magnetischen Größe am Prüfpunkt bekannt ist.

Sind die Führungsgruppen zueinander führungsäquivalent ausgestaltet, so befinden sich vorteilhafterweise die erste Führungsseite gegenüber der zweiten Führungsseite, und die erste Magnetseite gegenüber der zweiten Magnetseite, sowie die Mitte der ersten Längsausdehnung gegenüber der Mitte der zweiten Längsausdehnung, wobei auf der ersten Magnetseite an einer Prüfposition entlang der Längsrichtung eine magnetische Größe mit einem fünften Wert und auf der zweiten Magnetseite an der Prüfposition entlang der Längsrichtung eine magnetische Größe mit einem sechsten Wert aufweist, der sich vom fünften Wert unterscheidet. "Gegenüber" bedeutet hier in Bezug auf den Ursprung bzw. die dadurch laufende Achse der Längsrichtung. Die beiden Magnetseiten können auch die gleiche Längenausdehnung aufweisen, womit sich neben der Mitte der Längsausdehnung auch Anfang und Ende der ersten und zweiten Magnetseite jeweils gegenüber voneinander befinden.

Führungsäquivalent bedeutet für die Führungsgruppen, dass sie gegeneinander austauschbar sind, d.h. es ermöglichen die Transporteinheit um 180 Grad um eine in Längsrichtung liegende Achse oder auch eine in Höhenrichtung liegende Achse zu rotieren. Vor einer derartigen Rotation wirken die Führungselemente der ersten Führungsgruppe in Wirkung, beispielsweise in Eingriff, mit den Strecken-Führungselementen der ersten Strecken-Führungsgruppe und die Führungselemente der zweiten Führungsgruppe im Eingriff mit den Strecken-Führungselementen der zweiten Strecken-Führungsgruppe. Sind die erste Führungsgruppe und die zweite Führungsgruppe beispielsweise entlang der Längsrichtung zueinander symmetrisch, so kann eine Führungsäquivalenz zueinander sichergestellt werden. Nach der erwähnten Rotation um eine in Längsrichtung liegende Achse, befinden sich die Führungselemente der ersten Führungsgruppe in Wechselwirkung mit den Strecken-Führungselementen der zweiten Strecken-Führungsgruppe und die Führungselemente der zweiten Führungsgruppe im Eingriff mit den Strecken-Führungselementen der ersten Strecken-Führungsgruppe.

Durch eine Detektion des Ist-Werts einer magnetischen Prüfgröße an einem Prüfpunkt kann bei einer derartigen Transporteinheit durch das erfindungsgemäße Verfahren auch eine Drehung um 180 Grad um eine in Längsrichtung liegende Achse erkannt werden. Dazu entspricht der Prüfpunkt der Prüfposition auf der ersten oder zweiten Magnetseite und es folgt ein Vergleich des Ist-Werts der Prüfgröße im Prüfpunkt mit einem passenden Referenzwert. Der Referenzwert der Prüfgröße entspricht beispielsweise dem fünften Wert und der Ist-Wert wird am Prüfpunkt in Form der ersten Prüfposition an der vermuteten ersten Magnetseite ermittelt. Stimmt der ermittelte Ist-Wert der magnetischen Prüfgröße mit dem Referenzwert überein, so kann davon ausgegangen werden, dass sich die Transporteinheit in Standardorientierung befindet - d.h. sich die der Prüfpunkt tatsächlich an der erste Magnetseite befindet. Wird jedoch als Ist-Prüfgröße beispielsweise der sechste Wert ermittelt und stimmt somit nicht mit dem Referenzwert überein, so kann von einer Verdrehung um eine in Längsrichtung liegende Achse ausgegangen werden. Es wurde also festgestellt, dass sich der Prüfpunkt an der zweiten Magnetseite befindet.

Es ist ganz besonders vorteilhaft, wenn der erste Prüfabstand dem zweiten Prüfabstand und der Prüfposition entspricht. Damit können Drehungen um sowohl eine in Längsrichtung, als auch eine in Querrichtung liegende Achse entlang durch Prüfung der des Werts der magnetischen Größe an einer Stelle (erster Prüfabstand entsprechend dem zweiten Prüfabstand entsprechend der Prüfposition) erkannt werden. Das bedeutet, dass zur Feststellung der Orientierung der Transporteinheit sowohl um eine in Längsrichtung, als auch eine in Querrichtung liegende Achse, nur ein Ist-Wert der magnetischen Prüfgröße an einer Prüfstelle der Transporteinheit bestimmt werden muss. Diese Prüfstelle entspricht somit je nach Art der (Nicht-)Verdrehung dem ersten Prüfabstand oder dem zweiten Prüfabstand, bzw. der Prüfposition, was wie bereits beschrieben über einen Vergleich des Ist-Werts mit einem Referenzwert festgestellt wird. Eine Drehung um sowohl die Querrichtung, als auch die Längsrichtung würde in diesem Fall damit jedoch fälschlicherweise als Standardorientierung interpretiert werden. Eine derartige Doppeldrehung vor dem Detektieren einer einfachen Drehung ist aber sehr unwahrscheinlich, weshalb dieser Fall vernachlässigt werden kann. Sind die Führungsgruppen führungsäquivalent, so könnte die Transporteinheit auch um die Höhenrichtung gedreht werden. Eine derartige Drehung wäre aber bei der oben geschilderten Ausgestaltung nicht erkennbar.

Vorteilhaft ist es zudem, wenn sich entlang der Längsrichtung alle Werte der magnetischen Größen auf der ersten Magnetseite von den Werten der magnetischen Größen auf der zweiten Seite unterscheiden. Damit kann eine Drehung um die Querrichtung anhand des Ist-Werts an einer beliebigen Prüfstelle entlang einer Magnetseite erkannt werden, sofern natürlich der passende Referenzwert bekannt ist.

Dabei ist es besonders vorteilhaft, wenn die Werte der magnetischen Größen auf der ersten Magnetseite asymmetrisch um die Mitte der ersten Längsausdehnung sind. Damit kann eine Drehung um eine in Querrichtung liegende Achse anhand des Ist-Werts an einer beliebigen Prüfstelle entlang der ersten Magnetseite erkannt werden, natürlich ebenso sofern der Referenzwert bekannt ist. Ist eine zweite Magnetseite vorhanden unterscheiden sich die Werte der magnetischen Größe auf der ersten Magnetseite von den Werten der magnetischen Größen auf der zweiten Seite entlang der gesamten Längsrichtung, so würde dies natürlich auch bedeuten, dass die Werte der magnetischen Größen auf der zweiten Magnetseite auch asymmetrisch um die Mitte der zweiten Längsausdehnung sind.

Die Aufgabe wird auch durch eine erfindungsgemäße Transporteinheit gelöst, die an der ersten Magnetseite in einem ersten Prüfabstand ausgehend von der Mitte der ersten Längsausdehnung in Richtung des ersten Endes eine magnetische Größe mit einem ersten Wert aufweist, und an der ersten Magnetseite im ersten Prüfabstand ausgehend von der Mitte der ersten Längsausdehnung in Richtung des ersten Anfangs eine magnetische Größe mit einem zweiten Wert, der dem ersten Wert entspricht, aufweist, wobei die Transporteinheit an der zweiten Magnetseite in einem zweiten Prüfabstand ausgehend von der Mitte der zweiten Längsausdehnung in Richtung des zweiten Endes eine magnetische Größe mit einem dritten Wert aufweist, und die Transporteinheit an der zweiten Magnetseite im zweiten Prüfabstand ausgehend von der Mitte der zweiten Längsausdehnung in Richtung des zweiten Anfangs eine magnetische Größe mit einem vierten Wert, der dem dritten Wert entspricht, aufweist, wobei sich der erste und zweite Wert von dem dritten und vierten Wert unterscheiden. Dadurch kann durch das erfindungsgemäße Verfahren durch Prüfung des Ist-werts einer magnetischen Prüfgröße auf der ersten und/oder zweiten Magnetseite im ersten Prüfabstand festgestellt werden, ob die Transporteinheit um die Höhenrichtung gedreht wurde. Ebenso kann durch Prüfung des Ist-Werts der magnetischen Prüfgröße im ersten Prüfabstand eine Drehung um eine in Längsrichtung liegende Achse der Querrichtung erkannt werden, jedoch nicht eine um eine in Querrichtung liegende Achse - auch wenn diese Drehung durch die Führungsäquivalenz möglich wäre. Voraussetzung für eine Drehung um die Höhenrichtung bzw. Längsrichtung ist jeweils Führungsäquivalenz der Führungsgruppen zueinander. Die Erkennung einer Orientierung entsprechend oder abweichend von der Standardorientierung kann wieder über den Vergleich des jeweiligen ermittelten Ist-Werts der magnetischen Prüfgröße mit einem Referenzwert erfolgen. Das Verfahren kann wie oben beschrieben angewendet werden und an dieser Stelle nicht nochmals im Detail ausgeführt.

Es können alle Werte der magnetischen Größen entlang der Längsrichtung an der ersten Magnetseite einen anderen Wert aufweisen, als an der zweiten Magnetseite, wobei vorteilhafterweise die Werte der magnetischen Größen auf der ersten Magnetseite symmetrisch um die Mitte der ersten Längsausdehnung und die Werte der magnetischen Größen auf der zweiten Magnetseite symmetrisch um die Mitte der zweiten Längsausdehnung sind. Damit ist eine Drehung um die Querrichtung oder Höhenrichtung durch eine Ermittlung des Ist-Werts der magnetischen Größe, sowohl auf der ersten, als auch der zweiten Magnetseite an beliebiger Prüfstelle möglich, womit natürlich wieder der jeweilige Referenzwert bekannt sein muss.

Die magnetische Größe kann durch einen magnetischen Widerstand, vorzugsweise einer an der ersten Magnetseite angebrachten ersten Magnetplatte, bzw. an der zweiten Magnetseite angebrachten zweiten Magnetplatte vorgegeben sein. Magnetplatten bestehen üblicherweise aus einem magnetisch gut leitfähigen Material und es sind an derartigen Magnetplatten beispielsweise jeweils eine erste bzw. zweite Anzahl Magnete angebracht. Es kann also beispielsweise der magnetische Widerstand der Transporteinheit entlang der Längsrichtung, beispielsweise eines Grundkörpers der Transporteinheit oder auch einer darauf angebrachten Magnetplatte an bestimmten Stellen, wie beispielsweise an einem Prüfabstand oder an einem Prüfpunkt, variiert werden. Dies kann durch unterschiedliche Dicken und/oder Materialzusammensetzungen, Ausnehmungen, etc. erreicht werden. In dieser Betrachtungsweise ist die magnetische Größe alleine durch die Transporteinheit vorgegeben. Die magnetische Größe muss aber nicht einen magnetischen Widerstand darstellen, sondern kann beispielsweise auch eine magnetische Polung oder einen magnetischen Fluss, welcher bekanntermaßen direkt vom magnetischen Widerstand beeinflusst wird, von an der Transporteinheit angeordneten Magneten erzeugt wird, darstellen.

Die Werte der magnetischen Größen in den jeweiligen Prüfabständen, bzw. Prüfpositionen können somit an der Transporteinheit durch bauliche Maßnahmen (Stärke, Position und Polung, der Magnete, Material und Dicke der Magnetplatten, etc.) definiert werden Die magnetische Prüfgröße kann ohne jegliche Sensoren ermittelt werden, beispielsweise indem der vorhandene magnetische Kreis durch eine bereits vorhandene Spulenregelung identifiziert wird. Dazu wird beispielsweise auch bei stillstehenden Transporteinheiten in die Antriebsspulen ein hochfrequentes Spannungssignal eingeprägt und das sich einstellende Stromsignal, d.h. eine Stromantwort, analysiert. Der Zusammenhang zwischen Strom und Spannung ist u.a. abhängig von der Induktivität, welche wiederum vom magnetischen Widerstand abhängt. Ist der magnetische Widerstand erfindungsgemäß an verschiedenen Prüfabständen, bzw. Prüfpositionen der Transporteinheit unterschiedlich, so unterscheidet sich ein Stromverlauf der einzelnen Spulen je nach Orientierung der Transporteinheit. So kann durch Bestimmung und Analyse einer Stromantwort und Vergleich von Ist-Werten und Referenzwerten der Prüfgrößen auf eine Orientierung der Transporteinheit geschlossen werden.

Ist die Transporteinheit in Bewegung, so kann beispielsweise eine Gegen-EMK Spannung, welche durch die Bewegung der Transporteinheit hervorgerufen wird, verwendet werden, um auf den Ist-Wert einer magnetische Prüfgröße zu schließen. Die Gegen-EMK-Spannung ist proportional zur zeitlichen Änderung des magnetischen Flusses im magnetischen Kreis. Ändert sich der magnetische Fluss aufgrund von unterschiedlichen Werten der magnetischen Größe, so kann dies mithilfe der Antriebsspulen festgestellt werden und somit auf eine Orientierung der Transporteinheit geschlossen werden. Ist beispielsweise im ersten Prüfabstand in Richtung des Anfangs der Magnetseite ein niedriger magnetischer Widerstand als in Richtung des Endes der Magnetseite vorgesehen, so wird über die Antriebsspulen aufgrund des höheren magnetischen Flusses am Anfang eine höhere Spannung induziert als am Ende.

Ganz besonders vorteilhafterweise ist an der ersten Magnetseite eine erste Anzahl Magnete, bzw. an der zweiten Magnetseite eine zweite Anzahl Magnete angeordnet, die jeweils in der Querrichtung mit einer Polung versehen sind, wobei die magnetische Größe durch die Polung der ersten Anzahl Magnete bzw. der zweiten Anzahl Magnete gegeben ist. Durch eine unterschiedliche Polung in den jeweiligen Prüfabständen, bzw. Prüfpositionen kann eine besonders einfache Feststellung der Orientierung der Transporteinheit ermöglicht werden. Die Polung beeinflusst natürlich ebenso den magnetischen Fluss im Magnetkreis, und kann damit ähnlich wie oben beschrieben aus dem magnetischen Fluss ermittelt werden.

Die magnetische Größe an einem Prüfabstand oder einer Prüfposition kann jedoch auch durch an der Transportstrecke angebrachte geeignete Sensoren, beispielsweise Magnetfeldsensoren erkannt werden. Mit derartigen Magnetfeldsensoren kann die Stärke oder auch die Polung eines Magnetfelds gemessen werden, mit bestimmten Magnetfeldsensoren auch die Polung des Magnetfelds, wodurch auf eine Orientierung der Transporteinheit geschlossen werden kann.

Der Wert der magnetischen Größe, z.B. die Polung der Magnete, wird dabei immer an einer Magnetseite ausgehend vom Zentrum der Transporteinheit als Bezugspunkt betrachtet. Insbesondere wenn die Polung als magnetische Größe herangezogen wird, so wird die Polung der nach außen gewandte Seite der Magnete verglichen. Äqulivalent könnte natürlich auch die nach innen gewandte Seite der Magnete verglichen werden, da diese ja in Querrichtung gepolt sind.

Sind also beispielsweise die Werte der magnetischen Größen entlang der Längsrichtung auf den beiden Magnetseiten verschieden, so bedeutet das für den Fall, dass die magnetische Größe durch die Polung der Magnete gegeben ist, dass alle Magnete der ersten Magnetseite entlang der Längsrichtung außen eine unterschiedliche Polung zu den Magneten der zweiten Magnetseite aufweisen. Das bedeutet, dass die Magnete der ersten Magnetseite hinsichtlich der Längsrichtung asymmetrisch zu den Magneten der zweiten Magnetseite gepolt sind, womit eine Drehung um die Längsrichtung anhand der Polung jedes Magnets, d.h. an beliebiger Stelle erkannt werden kann.

Beispielsweise können gleichartig gestaltete Magnete der Magnetseiten in Längsrichtung abwechselnd positiv und negativ gepolt sein. Bei Symmetrie um die Mitte der Längsausdehnung ergibt sich damit eine ungerade Anzahl an Magneten für jede Magnetseite, bei Asymmetrie eine gerade Anzahl.

Ein Langstatorlinearmotor kann zumindest eine erfindungsgemäße Transporteinheit und eine Transportstrecke aufweisen, wobei die Transportstrecke eine erste Strecken-Führungsgruppe und/oder eine zweiten Strecken-Führungsgruppe, die mit der erste Führungsgruppe und/oder der zweiten Führungsgruppe zusammenwirkt, aufweist um die zumindest eine Transporteinheit entlang der Transportstrecke in einer Bewegungsrichtung zu führen.

Das bedeutet, dass ein Langstatorlinearmotor eine Transportstrecke mit einer ersten Strecken-Führungsgruppe aufweisen kann, wobei die zumindest eine Transporteinheit eine erste Führungsgruppe aufweist. So wirkt die erste Strecken-Führungsgruppe mit der ersten Führungsgruppe zusammen um die zumindest eine Transporteinheit entlang der Transportstrecke in einer Bewegungsrichtung zu führen. Die Transporteinheit kann wie oben beschreiben um eine in Querrichtung liegende Achse gedreht werden woraufhin wieder die erste Strecken-Führungsgruppe mit der ersten Führungsgruppe zusammenwirkt und zumindest eine Transporteinheit "verdreht" entlang der Transportstrecke in einer Bewegungsrichtung geführt wird.

Ein Langstatorlinearmotor kann auch eine Transportstrecke mit einer ersten Strecken-Führungsgruppe und einer zweiten Strecken-Führungsgruppe aufweisen, wobei die zumindest eine Transporteinheit eine erste Führungsgruppe und eine zweite Führungsgruppe aufweisen kann. Die erste Strecken-Führungsgruppe wirkt mit der ersten Führungsgruppe bzw. der zweiten Führungsgruppe zusammen und die zweite Strecken-Führungsgruppe wirkt mit der zweiten Führungsgruppe, bzw. der ersten Führungsgruppe zusammen. Die zumindest eine Transporteinheit wird grundlegend in Standardorientierung entlang der Transportstrecke in einer Bewegungsrichtung geführt. Die Transporteinheit kann erfindungsgemäß wie oben beschreiben um eine in Querrichtung, Längsrichtung oder Höhenrichtung liegende Achse gedreht werden, wobei auch die erste Führungsgruppe und die zweite Führungsgruppe den Platz tauschen können und daraufhin mit der jeweilig anderen Strecken-Führungsgruppe zusammenwirken. So kann nach der Drehung die Transporteinheit "verdreht" entlang der Transportstrecke in Bewegungsrichtung geführt werden.

Die gegenständliche Erfindung wird nachfolgend unter Bezugnahme auf die Figuren 1 bis 6d näher erläutert, die beispielhaft, schematisch und nicht einschränkend vorteilhafte Ausgestaltungen der Erfindung zeigen. Dabei zeigt
Fig.1 einen schematischen Langstatorlinearmotor,
Fig.2 eine Perspektive einer Transporteinheit mit einer Magnetplatte
Fig.3a eine Transporteinheit mit einer Magnetplatte in Standardorientierung
Fig.3b die Transporteinheit mit einer Magnetplatte um eine Querrichtung gedreht
Fig.4 eine Perspektive einer Transporteinheit mit zwei Magnetplatten
Fig.5a eine erste Ausgestaltung einer Transporteinheit
Fig.5b die erste Ausgestaltung der Transporteinheit in Standardorientierung
Fig.5c die erste Ausgestaltung der Transporteinheit um eine in Querrichtung liegende Achse gedreht
Fig.5d die erste Ausgestaltung der Transporteinheit um eine in Längsrichtung liegende Achse gedreht
Fig.6a eine zweite Ausgestaltung einer Transporteinheit mit zwei Magnetplatten
Fig.6b die zweite Ausgestaltung der Transporteinheit in Standardorientierung
Fig.6c die zweite Ausgestaltung der Transporteinheit um eine in Längsrichtung liegende Achse gedreht
Fig.6d die zweite Ausgestaltung der Transporteinheit um eine in Höhenrichtung liegende Achse gedreht

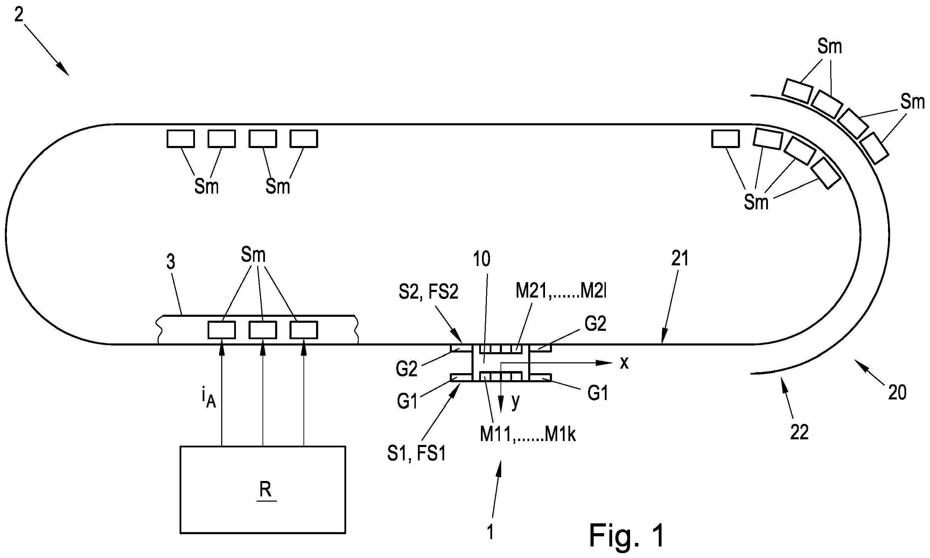

Fig.1 stellt ein einfaches Beispiel eines Langstatorlinearmotors 2 dar. Der Langstatorlinearmotor 2 ist dabei als geschlossene Transportstrecke 20 ausgeführt. Auf der Transportstrecke 20 sind eine Vielzahl von Antriebsspulen Sm angeordnet, die unter Kontrolle einer Regelungseinheit R (nur für einige Antriebsspulen Sm dargestellt) mit einem Spulenstrom **i**_{A} (als Vektor in Betrag und Richtung) bestromt werden, um ein bewegtes Magnetfeld zu erzeugen. Die in Bewegungsrichtung nebeneinander angeordneten Antriebsspulen Sm sind an einer ortsfesten Haltekonstruktion 3 (in Fig.1 nur angedeutet) an der Transportstrecke 20 angeordnet. Die Transporteinheiten 1 werden entlang der Transportstrecke 20 in einer Bewegungsrichtung bewegt, und sind dazu jeweils auf geeignete Weise an der stationär angeordneten Transportstrecke 20 geführt.

Die Bewegungsrichtung entspricht aus Sicht einer Transporteinheit 1 der Längsrichtung x. Eine Transporteinheit 1 weist eine seitlich angeordnete erste Anzahl k Magnete M11,...,M1k auf, die sich hier an einer hinsichtlich der Längsrichtung x seitlich befindliche erste Magnetseite S1 befinden. Wie in Fig. 1 dargestellt, weist die Transporteinheit 1 vorteilhafterweise zudem eine zweite Anzahl l seitlich angeordneter Magnete M21,...,M2l auf, die sich hier an einer hinsichtlich der Längsrichtung x seitlich befindlichen zweiten Magnetseite S2 befinden, wobei sich die zweite Magnetseite S1 gegenüber der ersten Magnetseite S2 befindet. Weist die Transporteinheit 1 an zwei Seiten (hier den Magnetseiten S1, S2) jeweils eine erste Anzahl k Magnete M11,...,M1k bzw. zweite Anzahl l Magnete M21,...,M2l auf, so können passend dazu an beiden Seiten der Transportstrecke 20 (in Bewegungsrichtung gesehen) jeweils Antriebsspulen Sm vorgesehen sein, die mit den jeweiligen Magneten M11,...,M1k, M21,...,M2l zusammenwirken um eine Bewegung der Transporteinheiten 1 zu verursachen. Dazu werden vorzugsweise nur die Antriebsspulen Sm im Bereich der Magneten M11,...,M1k, M21,...,M2l bestromt, wobei dieser Bereich auch Antriebspulen Sm umfassen kann, die sich vor und/oder nach der Transporteinheit 1 befinden. Selbstverständlich können entlang der Transportstrecke 20 auch mehr als eine Transporteinheit 1 bewegt werden, wobei jede Transporteinheit 1 durch entsprechendes Bestromen der Antriebsspulen Sm im Bereich der Transporteinheit 1 unabhängig von den anderen Transporteinheiten 1 (in Richtung, Position, Geschwindigkeit und Beschleunigung) bewegt werden kann. Die Transportstrecke 20 kann dabei, je nach Anwendung und Bedarf, beliebig geformt sein und kann geschlossene und/oder offene Streckenabschnitte umfassen. Die Transportstrecke 20 muss nicht in einer Ebene liegen, sondern kann auch beliebig im Raum geführt sein. Das grundlegende Funktionsprinzip eines Langstatorlinearmotors 1 ist hinlänglich bekannt, sodass hier nicht weiter darauf eingegangen wird.

Es wird zur Beschreibung der Orientierung von einem dreidimensionalen kartesischen Koordinatensystem ausgegangen, wobei die x-Richtung als Längsrichtung x bezeichnet wird, die y-Richtung als Querrichtung y und die z-Richtung, die sich bekanntermaßen im Sinne einer Rechtschraube aus der x-Richtung und der y-Richtung ergibt, als Höhenrichtung z. Der Ursprung des kartesischen Koordinatensystems wird in das Zentrum eines Grundkörpers 2 der jeweiligen Transporteinheit 1 gelegt, womit das Koordinatensystem jeweils mit den Transporteinheiten 1 mitbewegt wird. Als Zentrum kann hinsichtlich der x-Richtung und z-Richtung der geometrische Mittelpunkt bezüglich der Magnete M11,...,M1k, M21,...,M2l angesehen werden. Sind zwei Magnetseiten S1, S2 vorgesehen, so kann sich das Zentrum in y-Richtung mittig zwischen den beiden Magnetseiten S1, S2 befinden. Es wird davon ausgegangen, dass sich die Transporteinheit 1 auf dem Stator des Langstatorlinearmotors 2 in Längsrichtung x bewegt. Dabei zeigt die Längsrichtung x immer in die Bewegungsrichtung der Transporteinheit 1, die im Wesentlichen durch die Transportstrecke 20 vorgegeben wird. An einem gekrümmten Streckenabschnitt der Transportstrecke 20 ist die Bewegungsrichtung natürlich die Tangente an die Krümmung. Die Bewegungsrichtung kann damit grundsätzlich je nach Ausführung der Transportstrecke beliebig im Raum orientiert sein.

Die Orientierung der Achsen des Koordinatensystems ist aber natürlich nicht auf die Ausführung der Figuren beschränkt, sondern ist im Prinzip beliebig. Beispielsweise könnte ein Langstatorlinearmotor 1 realisiert sein, bei dem die Antriebsspulen S und Magnete M11,...,M1k, M21,...,M2l nicht seitlich, sondern oben und/oder unten angeordnet sein. Damit würden beispielsweise die y und z Achsen vorzeichenrichtig den Platz tauschen.

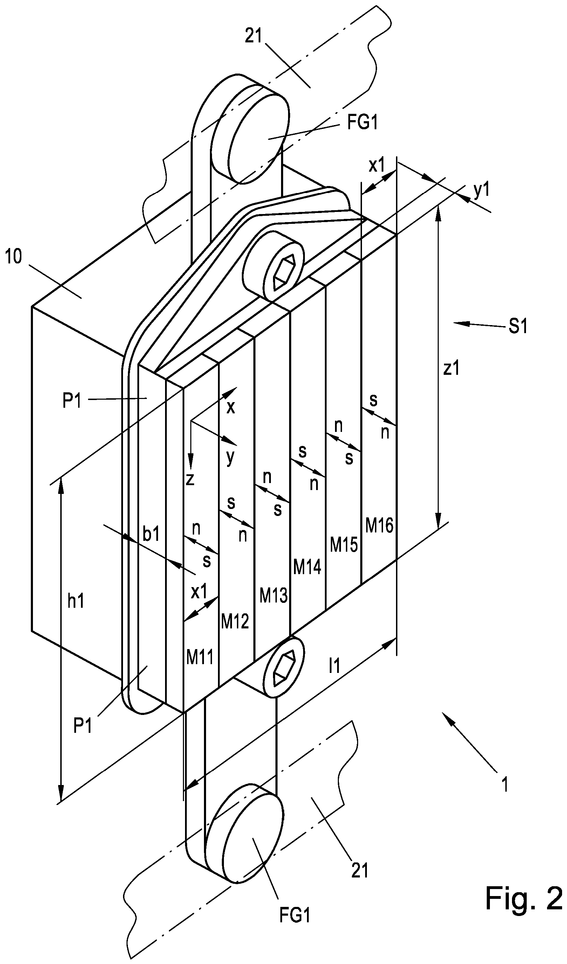

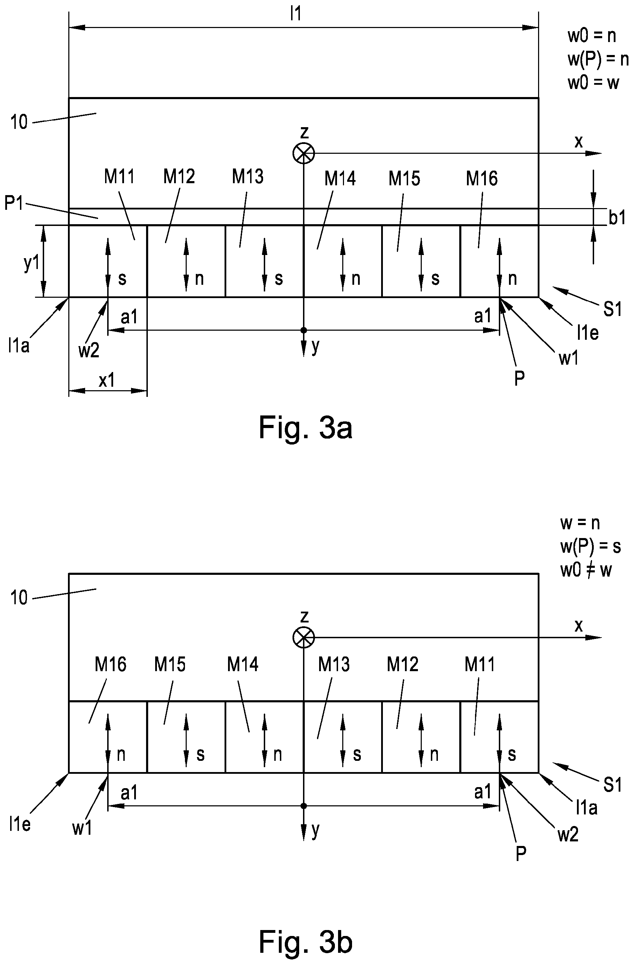

Es ist an zumindest einer in positiver Querrichtung y befindlichen ersten Führungsseite FS1 der Transporteinheit 1 eine erste Führungsgruppe G1 angeordnet. Die erste Führungsseite FS1 kann, wie in Fig. 1 dargestellt, vorteilhafterweise mit der ersten Magnetseite S1 identisch sein, sich jedoch auch an einer anderen Seite der Transporteinheit 1 befinden. Die erste Führungsgruppe G1 kann wie in Fig. 1 angedeutet Elemente in Längsrichtung x vor und nach dem Grundkörper 10 umfassen. Alternativ kann die erste Führungsgruppe G1 auch aus Führungselementen bestehen, die sich in Höhenrichtung z über und unter dem Grundkörper 10 befinden, wie in Fig. 2 und 3 angedeutet. Natürlich kann die erste Führungsgruppe G1 auch nur aus einem Führungselement in Bewegungsrichtung x vor oder nach, in Höhenrichtung z über oder unter, oder in positiver Querrichtung y neben dem Grundkörper 10 befinden oder sich aus eine beliebigen Kombination derartiger Führungselemente zusammensetzen.

Es kann in analoger Weise auch an einer in negativer Querrichtung -y befindlichen zweiten Führungsseite FS2 der Transporteinheit 1 eine zweite Führungsgruppe G2 angeordnet sein, die wiederum aus einzelnen Führungselement bestehen kann, welche sich in Längsrichtung x vor und/oder nach, bzw. in Höhenrichtung z über und/oder unter und/oder in negativer Querrichtung -y neben dem Grundkörper befinden. Die zweite Führungsgruppe G2 kann, aber muss nicht zwingend, gleichartig wie die erste Führungsgruppe G1 ausgestaltet sein.

An der Transportstrecke 20 muss immer zumindest eine Strecken-Führungsgruppe 21, 22 vorgesehen sein, das mit einem Element einer Führungsgruppe G1, G2 an einer Führungsseite FS1, FS2 der Transporteinheit 1 zusammenwirkt, um die Transporteinheit 1 entlang der Transportstrecke 20 in Bewegungsrichtung, d.h. hier der Längsrichtung x zu führen. Ist die Transporteinheit 1 mit zwei Führungsgruppen G1, G2 an zwei Führungsseiten ausgestattet, so kann die Transportstrecke 20 zumindest teilweise an beiden Seiten mit Streckenführungsgruppen 21, 22 ausgestattet sein, die jeweils mit den Elementen der Führungsgruppen G1, G2 der Transporteinheit 1 zusammenwirken. Damit ist in einem zweiseitigen Streckenabschnitt eine zweiseitige Führung der Transporteinheit 1 realisiert. In einem zweiseitigen Streckenabschnitt wird das Transportfahrzeug 1 damit durch das Zusammenwirken der Führungsgruppen G1, G2 mit den Streckenführungsgruppen 21, 22 an beiden Führungsseiten FS1, FS2 in Bewegungsrichtung x geführt. Natürlich kann auch zumindest teilweise eine einseitige Führung vorgesehen sein, selbst wenn die Transporteinheit 1 zwei Führungsgruppen G1, G2 an zwei Führungsseiten aufweist, wie es auch in Fig. 1 dargestellt ist. Hier ist eine zweiseitige Führung nur an zwei in Fig. 1 rechts befindlichen Transportsegmenten vorgesehen. In einem einseitigen Streckenabschnitt ist nur an einer Seite der Transportstrecke 20 eine Strecken-Führungsgruppe 21,22 angeordnet, um die Transporteinheit 1 in Bewegungsrichtung x unabhängig von der Ausführung der gegenüberliegenden Seite zu führen.

Die Führungsgruppen G1, G2 können aus verschiedenen Elemente, wie Rollen, Räder, Gleitelemente, Führungsflächen, Gleitflächen, usw., vorgesehen sein, wobei die Streckenführungselemente 21, 22 natürlich derart gestaltet sein müssen, dass die jeweiligen Elemente der Führungsgruppen G1, G2 darin geführt werden können. Die Antriebsspulen Sm werden vorzugsweise im Bereich der Strecken-Führungsgruppe 21, beispielsweise ebenfalls an der Haltekonstruktion 3 angeordnet, um eine kompakte Ausführung zu erreichen. Es ist natürlich auch vorstellbar, dass die Antriebssulen Sm sich auf anderen Seiten befinden, als die Strecken-Führungsgruppen 21,22, bzw. Streckenführungselemente, womit natürlich auch die Antriebsmagnete sich nicht auf der Seite der Elemente der Führungsgruppen G1, G2 befinden müssen

Die Führungsgruppen G1, G2 und die Streckenführungsgruppen 21,22 können natürlich auf verschiedenste Weise ausgeführt sein. Für die Erfindung ist es entscheidend, dass bei einer Transporteinheit mit nur einer Führungsgruppe G1 und zugehöriger erster Streckenführungsgruppe 21 an der Transportstrecke 20 die Führungsgruppe G1 führungssymmetrisch ist. Das bedeutet, dass die erste Führungsgruppe G1 geeignet ist, mit einer ersten Streckenführungsgruppe 21 der Transportstrecke 20 zusammenzuwirken um eine Bewegung der Transporteinheit 1 in die Bewegungsrichtung, also hier entlang der Längsrichtung x, zu ermöglichen und dass die erste Führungsgruppe G1 nach einer Rotation der Transporteinheit 1 um 180° um eine in Querrichtung y liegende Achse weiterhin mit der ersten Strecken-Führungsgruppe 21 der Transportstrecke 20 zusammenzuwirken kann, um eine Bewegung der rotierten Transporteinheit 1 in die Bewegungsrichtung zu ermöglichen. Das bedeutet, dass die erste Führungsgruppe G1 "vorwärts" und "rückwärts" mit der ersten Streckenführungsgruppe 21 zusammenzuwirken kann. Nach einer Rotation entspricht die Bewegungsrichtung weiterhin der positiven Längsrichtung x, da das Koordinatensystem nicht mit der Transporteinheit 1 mitgedreht wurde. Ist eine zweite Führungsgruppe G2 vorhanden und wirkt diese zumindest in Streckenabschnitten 20 mit einer zweiten Streckenführungsgruppe 22 zusammen, so gilt auch für die zweite Führungsgruppe G2 die Forderung der Führungssymmetrie.

Die Führungssymmetrie ist also Grundvoraussetzung für ein mögliches Verdrehen der Transporteinheit 1 um 180 Grad um eine in Querrichtung y liegende Achse. Ist eine derartige Drehung erfolgt, beispielsweise aufgrund von Weichen auf der Transportstrecke 20 oder manuell verdreht auf die Transportstrecke 20 aufgesetzte Transporteinheiten 1, so wird erfindungsgemäß eine Detektion der Falschorientierung ermöglicht.

Es wird grundlegend zwischen Transporteinheiten 1 mit auf einer ersten Magnetseite S1 angeordneten ersten Anzahl k Magnete M11,...,M1k und Transporteinheiten 1 mit zusätzlich an einer zweiten, vorzugsweise aber nicht zwingend gegenüberliegend der ersten Magnetseite S2 angeordneten zweiten Anzahl l Magnete M21,...,M2l unterschieden. Die erste Anzahl k Magnete M11,...,M1k bzw. zweite Anzahl l Magnete M21,...,M2l sind derart auf einer Transporteinheit 1 angebracht, dass sie mit den in Bewegungsrichtung der Transporteinheit 1 nebeneinander angeordnet Antriebsspulen des LLM-Stators zusammenwirken können. Hierzu kann die erste Anzahl k Magnete M11,...,M1k auf einer ersten Magnetplatte P1 angebracht sein und die zweite Anzahl l Magnete M21,...,M2l auf einer zweiten Magnetplatte P2. Die erste Anzahl k Magnete M11,...,M1k der ersten Seite und/oder zweite Anzahl l Magnete M21,...,M2l der zweiten Seite kann mit den zugeordneten Antriebsspulen einer Seite eines LLM-Stators zusammenwirken.

Erfindungsgemäß weist die Transporteinheit 1 an der ersten Magnetseite S1, die sich entlang der Längsrichtung x über eine erste Längsausdehnung l1 von einem ersten Anfang l1a bis zu einem ersten Ende l1e erstreckt, in einem ersten Prüfabstand a1 ausgehend von der Mitte einer ersten Längsausdehnung l1 in Richtung des ersten Endes l1e eine magnetische Größe mit einem ersten Wert w1 auf und im ersten Prüfabstand a1 ausgehend von der Mitte der ersten Längsausdehnung l1 in Richtung des ersten Anfangs l1a eine magnetische Größe mit einem zweiten Wert w2 auf, der sich vom ersten Wert w1 unterscheidet, wie später anhand der Fig. 2 und 3 im Detail beschrieben.

Stellt die magnetische Größe beispielsweise einen magnetischen Widerstand der ersten Magnetplatte P1 , bzw. der zweiten Magnetplatte P2 dar, so muss lediglich dafür Sorge getragen werden, dass ein Wert des magnetischen Widerstands in einem ersten Prüfabstand a1 ausgehend von der Mitte einer ersten Längsausdehnung l1 in Richtung des ersten Endes l1e einen andere Wert als der Wert des magnetischen Widerstands im ersten Prüfabstand a1 ausgehend von der Mitte der ersten Längsausdehnung l1 in Richtung des ersten Anfangs l1a aufweist. Dies kann beispielsweise über unterschiedliche Dicken und/oder Materialzusammensetzungen, Ausnehmungen etc. der Magnetplatten P1, P2 oder anderer magnetisch leitfähiger Elemente der Transporteinrichtung 1 erreicht werden.

Grundlegend ist die Art der magnetischen Größe für den Fachmann beliebig wählbar. In Folge soll die Erfindung anhand der Polung n, s der ersten Anzahl k Magnete M11,...,M1k bzw. zweite Anzahl l Magnete M21,...,M2l als magnetische Größe beispielhaft beschrieben. Es soll auf die Anordnung und Polung einer ersten Anzahl k Magnete M11,...,M1k, hier beispielhaft auf der ersten Magnetplatte P1 angebracht, bzw. - sofern vorhanden - einer zweiten Anzahl l Magnete M21,...,M2l, hier beispielhaft auf einer zweiten Magnetplatte P2 angeordnet, eingegangen werden.

Fig. 2 zeigt eine perspektivische Darstellung einer Transporteinheit 1. Eine Transporteinheit 1 eines Langstatorlinearmotors besteht im Wesentlichen aus einem, der Einfachheit halber quaderförmigen angenommenen Grundkörper 10, mit einer ersten Magnetseite S1. Die erste Magnetseite S1 erstreckt sich in Längsrichtung x über eine erste Längsausdehnung l1 und in Höhenrichtung z über eine erste Höhe h1. Allfällige andere bekannte Komponenten einer Transporteinheit 1, wie beispielsweise Bauteilaufnahmen, sind der Einfachheit halber und weil diese für das Verständnis der Erfindung unerheblich sind nicht dargestellt. Auf der ersten Magnetseite des Grundkörpers 10 in positiver Querrichtung y ist eine erste Anzahl k plattenförmiger Magnete M11,...,M1k an einer ersten Magnetplatte P1 angeordnet. Eine erste Anzahl k Magnete M11,...,M1k erstrecket sich jeweils in Längsrichtung x über eine erste Magnetlänge x1 und in Höhenrichtung z um eine erste Magnethöhe z1 und weiset in Querrichtung y eine erste Magnetdicke y1 auf.

Es ist in positiver Höhenrichtung z an einer ersten Führungsseite FS1 eine erste Führungsgruppe FG1 und in negativer Höhenrichtung -z an einer zweiten Führungsseite FS2 eine weitere erste Führungsgruppe FG1 am Grundkörper 10 angebracht. Die ersten Führungsgruppen FG1 stehen dabei mit strichpunktiert skizzierten ersten Strecken-Führungsgruppen 21 in Wechselwirkung und sind führungssymmetrisch, d.h. dass eine Führung der Transporteinheit 1 in Längsrichtung x sowohl in Standardorientierung, aber nach einer 180 Grad-Rotation um eine in Querrichtung liegende Achse möglich ist. Dies wird hier dadurch erreicht, dass die in negativer Höhenrichtung -z angebrachte erste Führungsgruppe FG1 symmetrisch zur in positiver Höhenrichtung z angebrachten ersten Führungsgruppe FG1 ist. Die zugehörigen ersten Strecken-Führungsgruppen 21 müssen natürlich ebenso führungssymmetrisch sein, was hier ebenso durch Symmetrie der Strecken-Führungsgruppen 21 erreicht wird.

Die in Fig. 2 abgebildete Transporteinheit 1 weist an einer ersten Magnetseite S1 eine erste Anzahl, hier k=6, Magnete M11, M12, M13, M14, M15, M16 auf, die hier an einer ersten Magnetplatte P1 angebracht sind. Die einzelnen k=6 Magnete M11,...,M16 weisen hier - wie üblich, jedoch nicht zwingend notwendig - identische Abmessungen (d.h. erste Magnetlänge x1, die erste Magnethöhe z1 und die erste Magnetdicke y1) auf und erstrecken sich zur einfacheren Darstellung in Höhenrichtung z bis an den Rand der ersten Seite des Grundkörpers 10. Zudem sind die k (hier sechs) Magnete M11,...,M1k, vorteilhafterweise in Längsrichtung x nebeneinander jeweils bis an den Rand der ersten Seite des Grundkörpers 10 angeordnet, was bedeutet, dass die Summe der Magnetlängen x1 der ersten Anzahl k Magnete M11,...,M1k vorteilhafterweise der ersten Längsausdehnung 11 des Grundkörpers entspricht - wenn die k Magnete M11,...,M1k direkt aneinander anliegen. Die erste Magnetseite S1 entspricht in der dargestellten Ausgestaltung vorteilhafterweise der ersten Führungsseite FS1.

Die k (hier sechs) Magnete M11,...,M1k weisen in Querrichtung y jeweils eine Polung von Nord n nach Süd s oder umgekehrt auf, was bedeutet, dass jeweils die dem Ursprung, d.h. dem Zentrum der Transporteinheit 1 zugewandte Seite (negative Querrichtung -y) der einzelnen k Magnete M11,...,M1k unterschiedlich gepolt ist als die dem Zentrum abgewandte Seite (positive Querrichtung y). In Höhenrichtung z, sowie in Längsrichtung x hingegen weisen die erste Anzahl k Magnete M11,...,M1k jeweils eine einheitliche Polung n, s auf. In Fig. 1 sind die k=6 Magnete M11,...,M1k alternierend gepolt, womit sich auf der dem Zentrum zugewandten Seite für die Polung der k=6 Magnete M11,...,M1k in Längsrichtung eine Polreihenfolge n-s-n-s-n-s ergibt und dementsprechend auf der dem Zentrum abgewandten Seite eine Polreihenfolge s-n-s-n-s-n. Es soll in Folge immer die Polung n, s der vom Zentrum abgewandten Seite verglichen werden.

Fig. 3a,b zeigt eine Darstellung der k=6 Magnete M11,...,M1k einer Transporteinheit 1 mit einem zentralen Grundkörper 10 in der xy-Ebene. Auf eine Darstellung der ersten Führungsgruppen FG1 wurde aus Übersichtlichkeitsgründen verzichtet. Auf dem Grundkörper 10 in dessen Zentrum sich der Ursprung des kartesischen Koordinatensystems befindet, ist in positiver Querrichtung y an einer ersten Magnetseite S1 eine Magnetplatte P1 befestigt. Die erste Magnetplatte P1 erstreckt sich hier über die erste Magnetseite und weist die ersten Längsausdehnung l1 und eine erste Plattendicke b1 auf und ist auf der dem Grundkörper 2 abgewandten Seite mit den k=6 Magneten M11,...,M1k bestückt. Die k=6 Magnete M11,...,M1 k weisen identische Dimensionen d.h. Magnetlänge x1 und Magnetbreite y1 (in Fig. 3a der Übersicht halber nur beim ersten Magneten M11 eingezeichnet) und Magnethöhe z1 (nicht eingezeichnet, da normal zur xy-Ebene) auf. Die Polreihenfolge der k=6 Magnete M11,...,M1k auf der ersten Magnetplatte P1 abgewandten Seite lautet s-n-s-n-s-n. Das erste Ende l1e befindet sich vom Ursprung aus gesehen standardmäßig in positiver Längsrichtung x, und der erste Anfang l1a in negativer Längsrichtung -x.

Da die k=6 Magnete M11,...,M1k auf der ersten Magnetplatte P1 in Längsrichtung x nebeneinander angeordnet sind, können Transporteinheiten 1 mit nur einer Magnetplatte P1 auch um 180 Grad um die Querrichtung y befindet, gedreht werden. Nach einer Drehung um die Querrichtung y befindet sich das erste Ende l1e in positiver Längsrichtung x, und der erste Anfang l1a in negativer Längsrichtung -x, wie in Fig. 3b dargestellt. Das bedeutet, dass die Reihenfolge der k=6 Magnete M11,...,M1k verdreht ist und somit die Polreihenfolge auf der der ersten Magnetplatte P1 abgewandten Seite nunmehr n-s-n-s-n-s darstellt.

Eine Drehung um die Querrichtung y kann beispielsweise beim Aufbringen der Transporteinheit 1 auf dem LLM-Stator erfolgen. Es kann jedoch auch während des Betriebs des Langstatorlinearmotors mit einer solchen Transporteinheit 1 durch die Gestaltung der Transportstrecke des Langstatorlinearmotors, insbesondere bei verschiedenen Streckenabschnitten, die mit Weichen miteinander verbunden sind, eine Drehung der Transporteinheit 1 um die Querrichtung y erfolgen.

Erfindungsgemäß sind die k=6 Magnete M11,...,M1k derart gepolt, dass zumindest ein Magnet M11,...,M1k in einem ersten Prüfabstand a1 ausgehend von der Mitte der ersten Längsausdehnung l1 in Richtung des ersten Endes l1e eine andere Polung n, s aufweist als ein Magnet im ersten Prüfabstand a1 ausgehend von der Mitte der ersten Längsausdehnung l1 in Richtung des ersten Anfangs l1a, was im Ausführungsbeispiel nach Fig.2 bzw. Fig.3a, b für jeden beliebigen Prüfabstand a1 gültig ist.

Damit kann durch das erfindungsgemäße Verfahren in einfacher Weise auf eine Orientierung der Transporteinheit 1 geschlossen werden, indem an einer Magnetseite S1 an einem Prüfpunkt P ein Ist-Wert w0 einer magnetischen Prüfgröße ermittelt und mit einem Referenzwert verglichen wird.

Im dargestellten Ausführungsbeispiel entspricht die Prüfgröße P der Polung n, s des Magneten M11,...,M1k am Prüfpunkt P, wobei der Prüfpunkt P dem ersten Prüfabstand a1 ausgehend von der Mitte der Längsausdehnung l1 der ersten Magnetplatte P1, (die Mitte wird hier von der zentral angenommenen Querrichtung y geschnitten), in positiver Längsrichtung x bzw. in negativer Längsrichtung -x (je nachdem ob die Transporteinheit 1 verdreht ist, oder sich in Standardorientierung befindet) entspricht. Die Festlegung der Standardorientierung ist dabei natürlich beliebig und kann daher auch umgekehrt sein.

Es sei angenommen, dass sich die Transporteinheit 1 in Fig 3a in Standardorientierung (d.h. Anfang l1a "vorne" und Ende l1e "hinten") befindet. Der sechste Magnet M16 weist in einem ersten Prüfabstand a1 von der Querrichtung y aus in Richtung des ersten Anfangs l1a (hier in positiver Längsrichtung x) einen ersten Wert w1 in Form einer Polung von w1=n auf. Der erste Magnet M11 weist einen zweiten Wert w2 in Form einer Polung von s in Richtung des ersten Endes l1e (hier in negativer Längsrichtung -x) auf: w2=s.

Als Referenzwert w0 ist die Polung n des sechsten Magneten M16 festgelegt: w0=n. Der Prüfpunkt P befindet sich im ersten Prüfabstand a1 in positiver Längsrichtung x - in Richtung des ersten Anfangs I1a, da in Standardorientierung. Wird nun der Ist-Wert w im Prüfpunkt P ermittelt, d.h. die die Polung des sechsten Magneten M16, so ergibt diese Prüfung für den Ist-Wert w eine Polung von w=n. Da der Ist-Wert w=n mit dem Referenzwert w0=n übereinstimmt (w=w0), kann von einer Standardorientierung ausgegangen werden, d.h. dass sich der erste Anfang l1a tatsächlich in positiver Längsrichtung x, also "vorne", und das erste Ende l1e in negativer Längsrichtung -x, also "hinten", befindet, wie in Fig. 3a dargestellt.

Ist die Transporteinheit 1 nach einer Drehung um eine in Querrichtung liegende Achse in Gegenorientierung orientiert, wie in Fig. 3b dargestellt, so befindet sich der Prüfpunkt P im ersten Prüfabstand a1 in Richtung des ersten Endes l1e. Das erste Ende l1e befindet sich in positiver Längsrichtung x "vorne" und dementsprechend der erste Anfang l1a in negativer Längsrichtung -x, also "hinten". Wird nun der Ist-Wert w(P) im Prüfpunkt P bestimmt, d.h. hier die die Polung s des befindlichen ersten Magneten M11, so ergibt diese Prüfung für den Ist-Wert w(P) eine Polung von s: w(P)=s. Da der Ist-Wert w(P)=s nicht mit dem Referenzwert w0=n übereinstimmt, wird auf eine Falschorientierung der Transporteinheit 1 geschlossen.

In analoger Weise kann der Prüfpunkt P natürlich stattdessen oder zusätzlich auch in den ersten Prüfabstand a1 in negativer Längsrichtung x gelegt werden, wobei natürlich immer der Referenzwert w0 angepasst werden muss, hier also auf eine Polung von s in Standardorientierung.

Ist die Transporteinheit 1 nach einer Drehung um eine in Querrichtung liegende Achse in Gegenorientierung orientiert, so kann ein Signal ausgegeben werden und die Transporteinheit beispielsweise abermals um 180° um eine in Querrichtung liegende Achse gedreht werden, sodass sie wieder in Standardorientierung orientiert ist. Diese Drehung kann beispielsweise bei Bedarf manuell erfolgen. Es kann natürlich der Referenzwert w0 angepasst, also die vormalige Standardorientierung zur Gegenorientierung und umgekehrt geändert werden. Natürlich müssen in diesem Fall auch alle weiteren relevanten Prozesse an die neue Orientierung angepasst werden.

Vorteilhafterweise ist der Wert der magnetischen Größe entlang der ersten Magnetseite S1 entlang der Längsrichtung x um die Mitte der Längsausdehnung l1 asymmetrisch. Damit kann die Prüfung der magnetischen Größe, d.h. hier der Polung n, s an jedem beliebigen Prüfpunkt P erfolgen, sofern der jeweilige Referenzwert w0 bekannt ist. Diese asymmetrische Polung n, s kann in einfacher Weise erfolgen, indem eine gerade erste Anzahl k Magnete M11,...,M1k mit in Längsrichtung alternierender Polung n, s verwendet werden, wie in Fig.2 und Fig.3a, 3b dargestellt. Diese Asymmetrie kann natürlich für jede beliebige ermittelbare magnetische Größe zur Realisierung der gegenständlichen Erfindung vorgesehen sein.

Da der strukturelle Aufbau einer Transporteinheit 1 mit einer Magnetplatte P1 grundlegend nur um die Mitte der ersten Längsausdehnung l1 symmetrisch sein kann, kann prinzipiell nur eine Drehung entlang der Längsrichtung x zu einer Änderung der Orientierung führen.

Weist eine Transporteinheit 1 jedoch auch eine zweite Magnetplatte P2 auf, so sind die Magnetseiten S1, S2 zur Symmetrie um die Mitte der Längsausdehnung l1 entlang der Längsrichtung x vorteilhafterweise auch symmetrisch zu einer durch die Längsrichtung x und Höhenrichtung z aufgespannte Ebene. Symmetrien beziehen sich immer auf den Ursprung, d.h. das Zentrum der Transporteinheit 1.

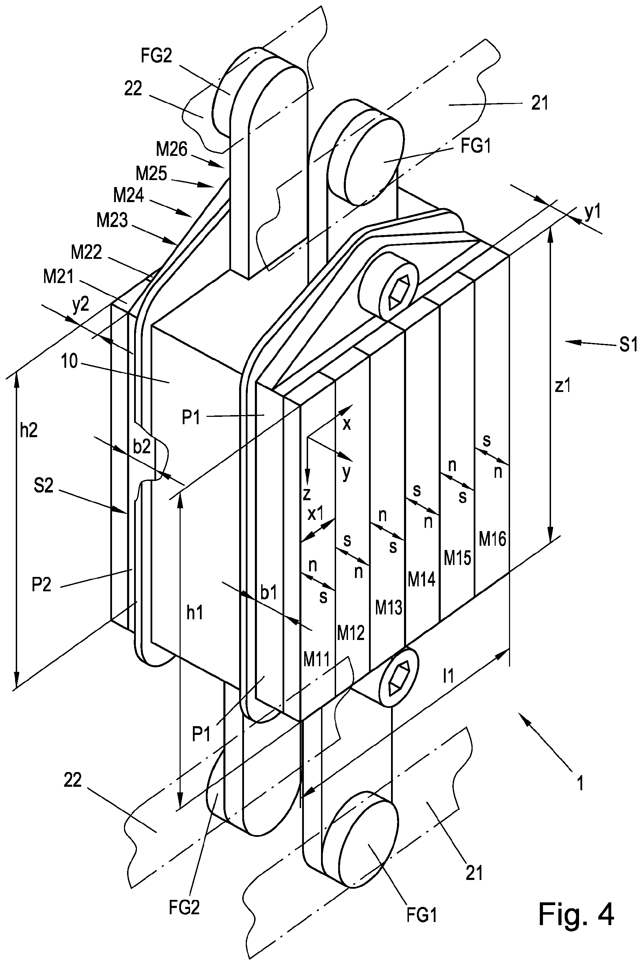

Das Ausführungsbespiel nach Fig. 4 zeigt eine Transporteinheit 1 auf dessen Grundkörper 2 in negativer Querrichtung -y an einer zweiten Magnetseite S2 mittels einer Halterung 4 eine zweite Magnetplatte P2 angebracht ist. Die zweite Magnetplatte P2 erstreckt sich über die somit zweite Magnetseite S2 in Längsrichtung x von einem zweiten Anfang l2a über eine zweite Längsausdehnung l2 zu einem zweiten Ende l2e und in Höhenrichtung z über eine zweite Höhe h2. Weiters weist die zweite Magnetplatte P2 eine zweite Plattendicke b2 in Querrichtung y auf. Vorteilhafterweise sind diese Abmessungen der zweiten Magnetseite S1, bzw. Magnetplatte P2, wie in Fig. 4 dargestellt, identisch zur ersten Magnetseits S1, bzw. Magnetplatte P1, d.h. die zweite Längsausdehnung l2 entspricht der ersten Längsausdehnung l1, die zweite Höhe h2 entspricht der ersten Höhe h1 und die zweite Plattendicke b2 entspricht der ersten Plattendicke b1. An der zweiten Magnetseits ist an der zweiten Magnetplatte P2 eine zweite Anzahl l (hier 6) plattenförmige Magnete M21,...,M2l in Längsrichtung x nebeneinander angeordnet, die sich über die zweite Magnetlänge x2 in Längsrichtung x und die zweite Magnethöhe z2 in Höhenrichtung z erstrecken und eine zweite Magnetdicke y2 in Querrichtung y aufweisen. Die zweite Anzahl l entspricht vorteilhafterweise der ersten Anzahl k. Auch die l Magnete M21,...,M2l erstrecken sich vorteilhafterweise in Höhenrichtung z bis an dem Rand der zweiten Magnetplatte P2 (abgesehen von der Halterung 4), was bedeutet, dass die zweite Magnethöhe z2 der zweiten Höhe h2 entspricht. Vorteilhafterweise sind die Abmessungen der zweiten Anzahl l Magnete M21,...,M2l mit der ersten Anzahl k Magnete M11,...,M1k der ersten Magnetplatte P1 identisch, d.h. die zweite Magnetlänge x2 entspricht der ersten Magnetlänge x1, die zweite Magnethöhe z2 entspricht der ersten Magnethöhe z1 und die zweite Magnetdicke y2 entspricht der ersten Magnetdicke y1. Daraus ergibt sich auch, dass die zweite Magnetlänge x2, die zweite Magnethöhe z2 und die zweite Magnetdicke y2, der einzelnen m Magnete M21,...,M2l für alle l Magnete der zweite Magnetplatte P2 identisch sind.

Es ist in positiver Höhenrichtung z an einer ersten Führungsseite FS1 eine erste Führungsgruppe FG1 und in negativer Höhenrichtung -z an einer zweiten Führungsseite FS2 eine weitere erste Führungsgruppe FG1 am Grundkörper 10 angebracht. Die ersten Führungsgruppen FG1 stehen dabei mit strichpunktiert skizzierten ersten Strecken-Führungsgruppen 21 in Wechselwirkung und sind hier beispielhaft führungssymmetrisch, d.h. dass eine Führung der Transporteinheit 1 in Längsrichtung x sowohl in Standardorientierung, als auch nach einer 180 Grad-Rotation um eine in Querrichtung y liegende Achse möglich ist. Dies wird hier beispielhaft dadurch erreicht, dass die in negativer Höhenrichtung -z angebrachte erste Führungsgruppe FG1 symmetrisch zur in positiver Höhenrichtung z angebrachten ersten Führungsgruppe FG1 ist.

Ebenso ist in positiver Höhenrichtung z an einer, hier der ersten Führungsseite FS1 gegenüberliegenden zweiten Führungsseite FS2 eine zweite Führungsgruppe FG2 und in negativer Höhenrichtung -z eine weitere zweite Führungsgruppe FG2 am Grundkörper 10 angebracht. Die zweiten Führungsgruppen FG2 stehen dabei analog mit strichpunktiert skizzierten zweiten Strecken-Führungsgruppen 22 in Wechselwirkung und sind ebenso beispielhaft führungssymmetrisch. Zusätzlich ist die erste Führungsgruppe FG1 zur zweiten Führungsseite beispielhaft führungsäquivalent, d.h. dass sie gegeneinander austauschbar sind. Damit ist für die Transporteinheit 1 eine Rotation um 180 Grad um eine in Längsrichtung x liegende Achse möglich. Nach einer derartigen Rotation befinden sich die Elemente der ersten Führungsgruppe FG1 in Wechselwirkung mit den Elementen der zweiten Strecken-Führungsgruppe 22 und die Elemente der zweiten Führungsgruppe FG2 im Eingriff mit den Elementen der zweiten Strecken-Führungsgruppe 21. Die erste Magnetseite S1 entspricht in der dargestellten Ausgestaltung vorteilhafterweise der ersten Führungsseite FS1 und die zweite Magnetseite S2 der zweiten Führungsseite.

Zusammengefasst sind vorteilhafterweise die zweite Anzahl m Magnete M21,...M2l hinsichtlich des Aufbaus und der Anordnung ersten Anzahl k Magnete M11,...M1k symmetrisch zur xy-Ebene, wie in Fig. 4 dargestellt, wobei die l Magnete M21,...M2l, wie auch die k Magnete M11,...M1k direkt aneinander anliegen, jedoch auch (beispielsweise auch nur teilweise) in einem Abstand voneinander angeordnet sein. Diese Symmetrie betrifft jedoch in erster Linie die grundlegende Anordnung der ersten Anzahl k Magnete M11,...,M2k und der zweiten Anzahl l M21,...,M2l Magnete, sowie der ersten Führungsgruppe G1 und zweiten Führungsgruppe G2.

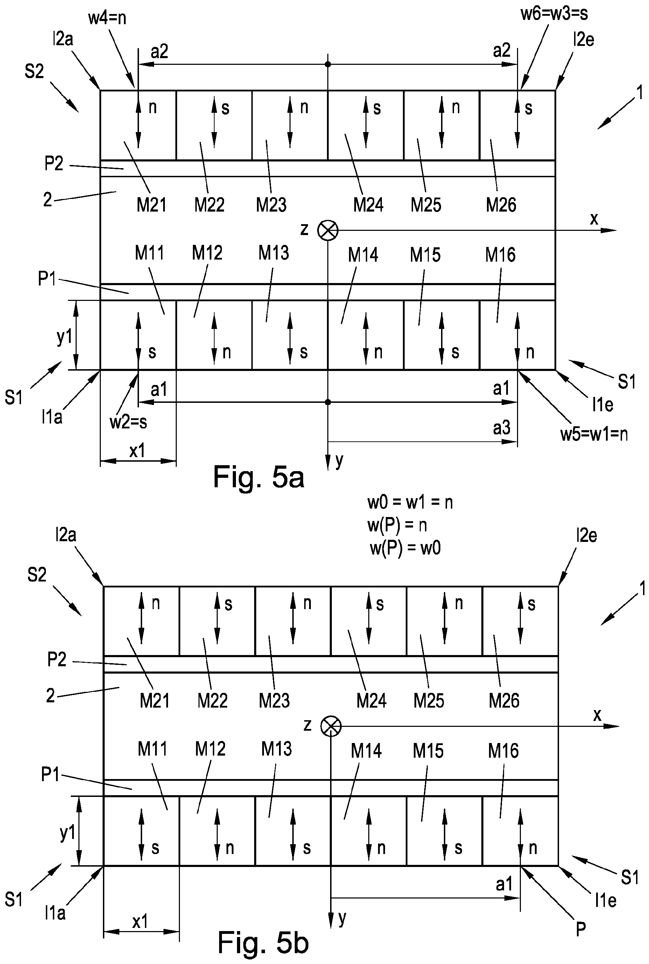

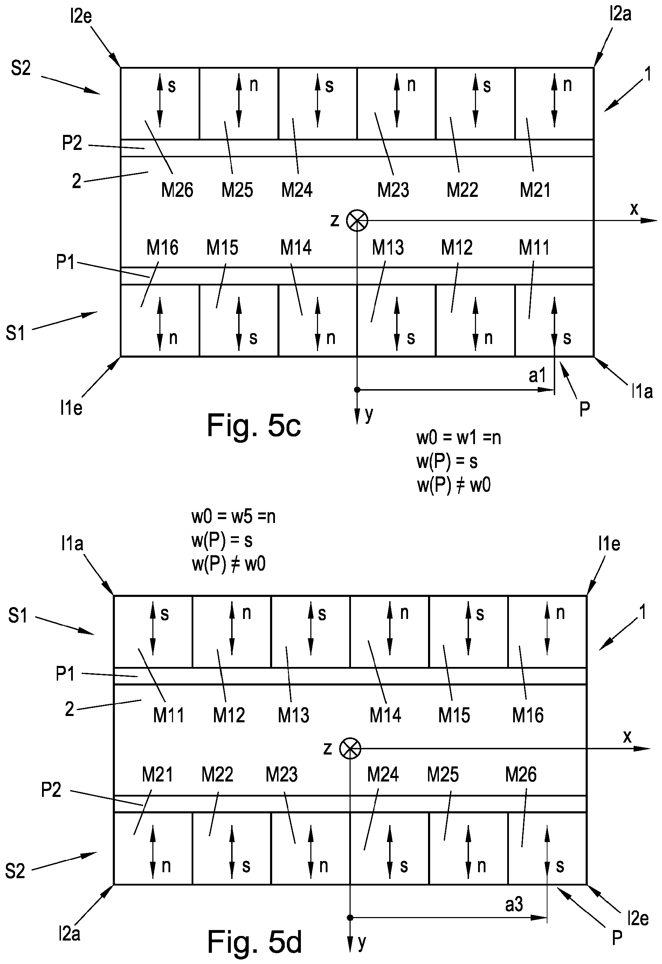

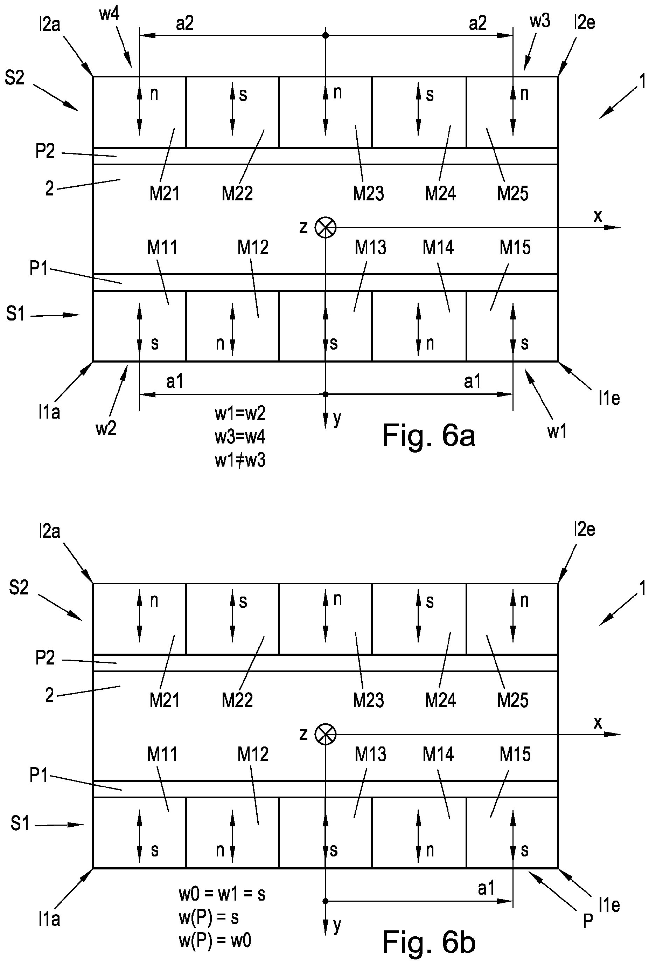

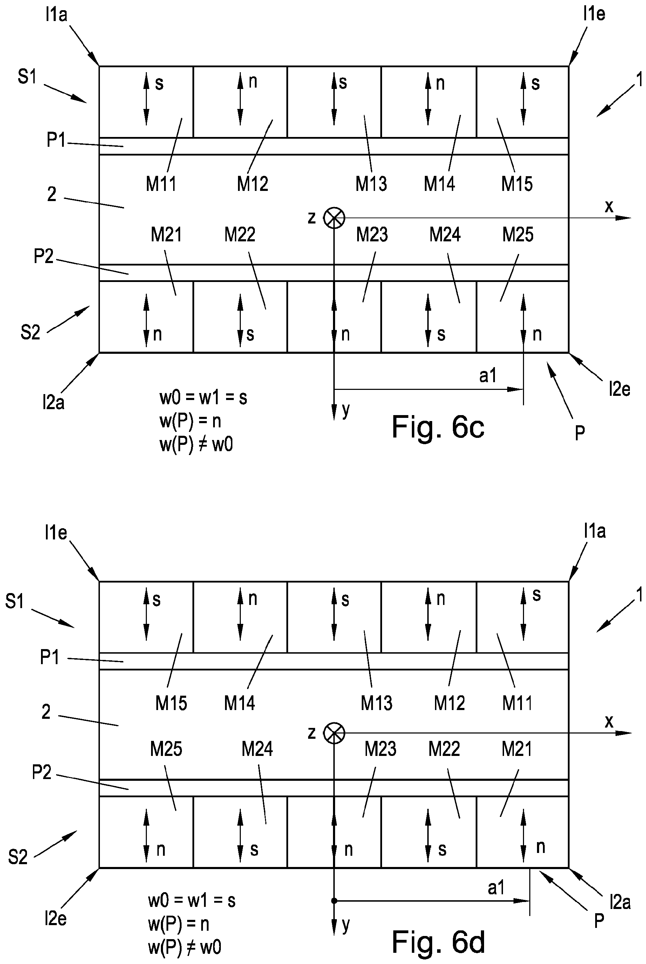

Die zweite Anzahl m Magnete M21,...,M2l weisen auch jeweils eine Polung von n nach s oder umgekehrt in Querrichtung y auf. Das muss nicht bedeuten, dass die zweite Anzahl m Magnete M21,...,M2l der zweiten Magnetplatte P2 entlang der Längsrichtung x analog wie die erste Anzahl k Magnete M11,...,M1k der erste Magnetplatte P1 gepolt sind. Die Polung der ersten Anzahl k Magnete M11,...,M1k und der zweiten Anzahl l Magnete M21,...,M2l ist in Fig. 4 aus Übersichtsgründen nicht eingezeichnet, da in Fig.5 und Fig.6 näher darauf eingegangen wird.

Aufgrund diesem symmetrischen Aufbau einer Transporteinheit 1, je nach Ausführung auch von Elementen der Transportstrecke 20, wie z.B. der ersten und zweiten Strecken-Führungselemente 21,22 Antriebspulen 21, etc,. mit einer ersten Anzahl k Magnete M11,...,M1k und der zweiten Anzahl l Magnete M21,...,M2l kann diese nicht nur (aufgrund der Führungssymmetrie) um 180° um eine in Querrichtung y liegende Achse gedreht am LLM-Stator angebracht werden, sondern (aufgrund der Führungsäquivalenz) auch um 180° um eine in Längsrichtung x liegende Achse y und um 180° um eine in Längsrichtung x liegende Achse Höhenrichtung z gedreht werden.

Erfindungsgemäß weist auch eine Transporteinheit 1 mit zwei Magnetseiten S1, S2 hier an der ersten Magnetseite S1 in einem ersten Prüfabstand a1 ausgehend von der Mitte der ersten Längsausdehnung l1 in Richtung des ersten Endes l1e eine magnetische Größe mit einem ersten Wert w1 auf und an der ersten Magnetseite S1 im ersten Prüfabstand a1 ausgehend von der Mitte der ersten Längsausdehnung l1 in Richtung des ersten Anfangs l1a eine magnetische Größe mit einem zweiten Wert w2 auf, der sich vom ersten Wert w1 unterscheidet. Das heißt hierfür die Polung n, s, der ersten Anzahl k Magnete M11,...,M1k als magnetische Größe, dass die erste Anzahl k (hier 6 Magnete) M11,...,M1k derart gepolt ist, dass zumindest ein Magnet M11,...,M1k in einem ersten Prüfabstand a1 ausgehend von der Mitte der ersten Längsausdehnung l1 in Richtung des ersten Endes l1e eine andere Polung n, s aufweist als ein Magnet im ersten Prüfabstand a1 ausgehend von der Mitte der ersten Längsausdehnung l1 in Richtung des ersten Anfangs I1a, wobei es ganz besonders vorteilhaft ist, wenn die Polung n, s aller Magnete M11,...,M1k der ersten Magnetseite S1 asymmetrisch um die Mitte der ersten Längsausdehnung l1, wie in Fig. 5a dargestellt.

Damit kann, die Transporteinheit 1 der Fig. 5a analog wie hinsichtlich der Transporteinheit 1 mit einer Magnetplatte P1 anhand Fig.3b gezeigt, durch Überprüfung eines Ist-Werts w(P) einer Prüfgröße an einem Prüfpunkt P, also beispielsweise einer Polung n, s im ersten Prüfabstand a1 (in positiver Querrichtung y, jedoch wahlweise in positiver Längsrichtung x oder in negativer Längsrichtung -x) bestimmt werden, ob sich die Transporteinheit 1 hinsichtlich der Querrichtung y in Standardrichtung oder in Gegenrichtung befindet. In Fig. 5b entspricht der Ist-Wert w(P)=n dem Referenzwert w0=n (welcher dem ersten Wert w1 des sechsten Magneten M16 entspricht, siehe Fig. 5a), d.h. die Transporteinheit 1 befindet sich in Standardorientierung. In Fig. 5c entspricht der Ist-Wert w(P)=s nicht dem Referenzwert w0 (welcher wieder dem ersten Wert w1 des sechsten Magneten M16 entspricht, siehe Fig. 5a), d.h. die Transporteinheit 1 befindet sich in Gegenorientierung.

Vorteilhafterweise weist die Transporteinheit 1 zudem an der zweiten Magnetseite S2 in einem zweiten Prüfabstand a2 ausgehend von der Mitte der zweiten Längsausdehnung l2 in Richtung des zweiten Anfangs l2a eine magnetische Größe mit einem vierten Wert w4 aufweist, der sich vom dritten Wert w3 unterscheidet. Das heißt hier für die Polung n, s, als magnetische Größe, dass auch die l (hier 6) Magnete M21,...,M2l auf dem Grundkörper 2 an der zweiten Magnetseite S2 derart gepolt sind, dass zumindest ein Magnet M21,...,M1l in einem zweiten Prüfabstand a2 ausgehend von der Mitte der zweiten Längsausdehnung l2 in Richtung des zweiten Endes l2e eine andere Polung n, s aufweist als ein Magnet M21,...,M1l im zweiten Prüfabstand a2 ausgehend von der Mitte der zweiten Längsausdehnung l2 in Richtung des zweiten Anfangs l2a, wobei es ganz besonders vorteilhaft ist, wenn die Polung n, s aller Magnete M21,...,M2l der zweiten Magnetseite S2 entlang der Längsrichtung x asymmetrisch um die Mitte der zweiten Längsausdehnung l2 ist (d.h. asymmetrisch zur yz-Ebene) ist, wie es in Fig.5a der Fall ist.

Damit kann durch Überprüfung des Ist-Werts w(P) der Prüfgröße an einem Prüfpunkt P an der zweiten Magnetseite S2, also beispielsweise einer Polung n, s eines Magneten M21,...,M1l im zweiten Prüfabstand a2, und Vergleich mit einem Referenzwert w0 bestimmt werden, ob sich die Transporteinheit 1 entlang der Längsrichtung in Standardorientierung (Fig.5b) oder in Gegenorientierung (Fig.5c) befindet - analog zur ersten Magnetseite S1, weshalb dies für die zweite Magnetseite S2 in den Figuren nicht nochmals ausgeführt wird.

In der Ausgestaltung nach Fig. 5a sind die Prüfabstände a1, a2 und die Prüfposition a3 identisch. Für die Prüfung der Orientierung reicht es aber natürlich aus, wenn die Prüfung anhand einer der beiden Magnetseiten S1, S2 durchgeführt wird.

Auch eine Drehung um eine entlang der Längsrichtung x verlaufende Achse ist detektierbar. Hierzu ist es jedoch erforderlich, dass sich die erste Führungsseite FS1 gegenüber der zweiten Führungsseite FS2 befindet und die erste Führungsgruppe G1 führungsäquivalent zur zweiten Führungsgruppe G2 ausgestaltet ist (d.h. dass die erste Führungsgruppe G1 gegen die zweite Führungsgruppe G2 austauschbar ist), dass sich die erste Magnetseite S1 gegenüber der zweiten Magnetseite S2 befindet und die Mitte der ersten Längsausdehnung l1 und die Mitte der der zweiten Längsausdehnung l2 gegenüber voneinander befinden, dass die Transporteinheit auf der ersten Magnetseite S1 an einer Prüfposition a3 entlang der Längsrichtung x eine magnetische Größe mit einem fünften Wert w5 aufweist, und dass die Transporteinheit 1 auf der zweiten Magnetseite S2 an der Prüfposition a3 entlang der Längsrichtung x eine magnetische Größe mit einem sechsten Wert w6 aufweist, der sich vom fünften Wert w5 unterscheidet. All diese Voraussetzungen sind in Fig. 5a i.V.m Fig. 3 gegeben, da die Polung n, s als magnetische Größe dient.

Die Polung des sechsten Magneten M16 der ersten Magnetseite S1 an der Prüfposition a3 ist in der nicht gedrehten Standardorientierung (Fig.5a) n, d.h. dass der fünfte Wert w5 gleich w5=n ist. Die Polung des sechsten Magneten M26 der zweiten Magnetseite S2 befindet sich an der Prüfposition a3 und weist erfindungsgemäß einen sechsten Wert w6=s auf, der sich vom fünften Wert w5=n unterscheidet. Es wird als Referenzwert w0 der Prüfgröße der fünfte Wert w5 des sechsten Magneten M16 der ersten Magnetseite S1 angenommen und auf der vermeintlich ersten Magnetseite S1 der magnetische Ist-Wert w(P) im Prüfpunkt P bestimmt. Befindet sich die Transporteinheit 1 in Standardorientierung, so entspricht der Ist-Wert w im Prüfpunkt P (z.B. entsprechend der Prüfposition a3 an der (vermeintlich und tatsächlich) ersten Magnetseite S1) dem Referenzwert w0.

Wird die Transporteinheit 1, aus Fig.5a jedoch um eine in Längsrichtung x verlaufende Achse um 180 Grad gedreht, so tauschen die erste Magnetseite S1 samt erster Anzahl k Magnete M11,...,M1k den Platz mit der zweiten Magnetseite S2 samt zweiter Anzahl l Magnete M21,...,M2l, wie in Fig. 5d ersichtlich. Es tauschen also der sechste Magnet M26 der zweiten Magnetseite S2 und der sechste Magnet M16 der ersten Magnetseite S1 den die Position. Es wird auf der vermeintlich ersten Magnetseite S1 (tatsächlich aber auf der zweiten Magnetseite S2) der magnetische Ist-Wert w(P) im Prüfpunkt P bestimmt. Der Ist-Wert w(P)=s im Prüfpunkt P (hier entsprechend der Prüfposition a3 an der ersten Magnetseite S1) unterscheidet sich somit vom Referenzwert w0=w5=n. Damit ist bestimmt, dass sich die Transporteinheit 1 hinsichtlich einer Rotation um eine in Längsrichtung x verlaufende Achse in Falschorientierung befindet.

Vorteilhafterweise sind der erste Prüfabstand a1, der zweite Prüfabstand a2 und die Stelle a3 identisch, wie es in Fig.5a der Fall ist, womit mittels eines Prüfpunktes P eine Falschorientierung um eine in Querrichtung y liegende Achse und um eine in Längsrichtung x liegende Achse erkannt werden kann. In der Ausgestaltung nach Fig. 5a ist jedoch keine Erkennung einer Drehung um eine in Höhenrichtung z liegende Achse, möglich.

Um eine Drehung einer Transporteinheit 1 um eine in Höhenrichtung z liegende Achse feststellen zu können, weist die Transporteinheit an der ersten Magnetseite S1 in einem ersten Prüfabstand a1 ausgehend von der Mitte der ersten Längsausdehnung l1 in Richtung des ersten Endes l1e eine magnetische Größe mit einem ersten Wert w1 auf und an der ersten Magnetseite S1 im ersten Prüfabstand a1 ausgehend von der Mitte der ersten Längsausdehnung l1 in Richtung des ersten Anfangs l1a eine magnetische Größe mit einem zweiten Wert w2, der dem ersten Wert w1 entspricht, auf, wobei die Transporteinheit 1 an der zweiten Magnetseite S2 in einem zweiten Prüfabstand a2 ausgehend von der Mitte der zweiten Längsausdehnung l2 in Richtung des zweiten Endes l2e eine magnetische Größe mit einem dritten Wert w3 aufweist und die Transporteinheit 1 an der zweiten Magnetseite S1 im zweiten Prüfabstand a2 ausgehend von der Mitte der zweiten Längsausdehnung l2 in Richtung des zweiten Anfangs l2a eine magnetische Größe mit einem vierten Wert w4, der dem dritten Wert w3 entspricht, aufweist, wobei sich der erste und zweite Wert w1, w2 von dem dritten und vierten Wert w3, w4 unterscheiden. Eine derartige Transporteinheit 1 ist in Fig. 6a dargestellt und ist strukturell bis auf die Anzahl der Magnete M11,...,M1k, M21,...,M2l mit der Ausgestaltung aus Fig.5a identisch - die Polung der Magnete M11,...,M1k, M21,...,M2l unterscheidet sich jedoch signifikant wobei eine Drehung um eine in Querrichtung y liegende Achse nicht erkennbar ist.

Vorteilhafterweise können die Werte der magnetischen Größen, d.h. hier die Polung der Magnete M11,...,M1k, M21,...,M2l entlang der Längsrichtung x an der ersten Magnetseite S1 einen anderen Wert aufweisen, als an der zweiten Magnetseite S2, wobei sie hier zudem jeweils pro Magnetseite S1, S2 symmetrisch um die Mitte der Längsausdehnung l1, bzw. l2 angeordnet sind. Eine besonders einfache Lösung stellt eine Transporteinheit 1 mit einer ungeraden Anzahl k, l an Magneten M11,...,M1k, M21,...,M2l, pro Magnetplatte P1, P2, die alternierende Polung n, s aufweisen, dar, wie auch in Fig. 6a dargestellt. Hier weist der fünfte Magnet M15 der ersten Magnetseite S1 im ersten Prüfabstand a1 in Richtung des ersten Endes l1e den ersten Wert w1 in Form der Polung s auf. Der erste Magnet M11 der ersten Magnetseite S1 der ersten Magnetseite S1 weist im ersten Prüfabstand a1 in Richtung des ersten Anfangs l1a den zweiten Wert w2 in Form der Polung s auf, der mit dem ersten Wert w1 übereinstimmt. Der fünfte Magnet M25 der zweiten Magnetseite S2 weist im zweiten Prüfabstand a2 in Richtung des zweiten Endes l2e den dritten Wert w3 in Form der Polung n auf. Der erste Magnet M21 der zweiten Magnetseite S2 der zweiten Magnetseite S2 weist im Prüfabstand a2 in Richtung des zweiten Anfangs l2a den vierten Wert w4 in Form der Polung n auf, der mit dem dritten Wert w3 übereinstimmt. Vorteilhafterweise entspricht der erste Prüfabstand a1 dem zweiten Prüfabstand a2, womit sich erster bzw. zweiter Wert vom dritten bzw. vierten Wert w1 =w2#w3=w4.

Fig.6b stellt die Transporteinheit 1 in Standardausrichtung dar. Der erste Anfang l1a der ersten Magnetseite S1 und auch der zweite Anfang l2a der zweiten Magnetseite S2 befinden sich in positiver Längsrichtung x und dementsprechend das erste Ende l1e der ersten Magnetseite S2 und auch das zweite Ende l2e der zweiten Magnetseite S2 in negativer Längsrichtung -x. Die erste Magnetseite S1 befindet sich zudem in positiver Querrichtung y, und die zweite Magnetseite S2 in negativer Querrichtung -y. Der erste Anfang l1a befindet sich also in positiver Längsrichtung x und positiver Querrichtung y), das erste Ende l1e in negativer Längsrichtung -x und positiver Querrichtung y, der zweite Anfang l2a in positiver Längsrichtung x, und negativer Querrichtung -y, das zweite Ende l2e in negativer Längsrichtung -x, und negativer Querrichtung -y.Als Referenzwert w0 ist die Polung n des fünften Magneten M15 der ersten Magnetseite S1 festgelegt, welcher den ersten Wert w1 aufweist: w0=w1=s.

Fig. 6b zeigt die Transporteinheit nach Fig. 6a wobei die Orientierung bestimmt wird. Die Transporteinheit befindet sich wie in Fig. 6a in Standardorientierung. Der Prüfpunkt P befindet sich im ersten Prüfabstand a1 in positiver Längsrichtung x in Richtung des ersten Anfangs l1a. Wird nun der Ist-Wert w(P) im Prüfpunkt P ermittelt, d.h. die Polung des fünften Magneten M15 entsprechend dem ersten Wert w1, so ergibt diese Prüfung für den Ist-Wert w eine Polung von w(P)=s. Da der Ist-Wert w(P)=s mit dem Referenzwert w0=w1=s übereinstimmt (w(P)=w0), kann von einer Standardorientierung ausgegangen werden.

In dieser Ausgestaltung ist nicht nur eine Drehung um die Höhenrichtung z detektierbar, sondern auch eine Drehung um die um die Längsrichtung x. In Fig.6c ist eine Drehung um die Längsrichtung x erfolgt, die in gleicher Weise, wie anhand der Fig.5c geschildert, detektiert werden kann.

Fig.6d zeigt die Transporteinheit aus Fig.6a, welche um die Höhenrichtung z, gedreht wurde. Es befindet sich der erste Anfang l1a nunmehr in negativer Längsrichtung -x und negativer Querrichtung -y, das erste Ende l1e in positiver Längsrichtung x und negativer Querrichtung - y, der zweite Anfang l2a in negativer Längsrichtung -x und positiver Querrichtung y und das zweite Ende l2e in positiver Längsrichtung x und positiver Querrichtung y. Der fünfte Magnet M15 der ersten Magnetseite S1 weist im Prüfabstand a1 entlang der positiven Längsrichtung nun die Polung s auf, der fünfte Magnet M25 der zweiten Magnetseite S2 die Polung n.

Der Prüfpunkt P befindet sich somit im ersten Prüfabstand a1 in Richtung des ersten Endes l1e. Das erste Ende l1e befindet sich in positiver Längsrichtung x "vorne" und dementsprechend der erste Anfang l1a in negativer Längsrichtung -x, also "hinten". Wird nun der Ist-Wert w(P) im Prüfpunkt P bestimmt, d.h. hier die Polung s des befindlichen ersten Magneten M21 der zweiten Magnetseite S2, so ergibt diese Prüfung für den Ist-Wert w(P) eine Polung von n: w=n. Da der Ist-Wert w=n nicht mit dem Referenzwert w0=s übereinstimmt, wird auf eine Falschorientierung der Transporteinheit 1 geschlossen.

Damit ist durch Feststellung des Ist-Werts einer magnetischen Prüfgröße an einer Magnetseite S1, S2 an einem Prüfpunkt P und Vergleich mit einem Referenzwert w0 eine Falschorientierung um die Höhenrichtung z feststellbar.

Es ist jedoch zu beachten, dass in dieser Ausgestaltung aufgrund der Symmetrie der magnetischen Größen um die Mitte der Längsausdehnungen l1, l2 keine Drehung um eine in Querrichtung y laufende Achse feststellbar ist. Zudem ist in dieser Ausgestaltung eine Drehung entlang eine in Längsrichtung x liegende Achse als auch eine in Höhenrichtung z Achse nicht feststellbar und würde fälschlicherweise als Standardorientierung angenommen werden.

## Patentansprüche

1. Transporteinheit (1) für einen Langstatorlinearmotor (2), wobei die Transporteinheit (1)
- eine hinsichtlich einer Längsrichtung (x) seitlich befindliche erste Führungsseite (FS1) aufweist, an der eine erste Führungsgruppe (G1) angeordnet ist,
- eine zumindest der Längsrichtung (x) seitlich befindlichen zweiten Führungsseite (FS2) aufweist, an der eine zweite Führungsgruppe (G2) angeordnet ist, wobei sich die zweite Führungsseite (FS2) gegenüber der ersten Führungsseite (FS1) befindet und die zweite Führungsgruppe (G2) führungsäquivalent zur ersten Führungsgruppe (G1) ausgestaltet ist
- eine hinsichtlich der Längsrichtung (x) seitlich befindliche erste Magnetseite (S1) aufweist, die sich entlang der Längsrichtung (x) über eine erste Längsausdehnung (l1) von einem ersten Anfang (l1a) bis zu einem ersten Ende (l1e) erstreckt,
- eine hinsichtlich der Längsrichtung (x) seitlich befindliche zweite Magnetseite (S2) aufweist, die sich entlang der Längsrichtung (x) über eine zweite Längsausdehnung (l2) von einem zweiten Anfang (l2a) bis zu einem zweiten Ende (l2e) erstreckt, wobei sich die erste Magnetseite (S1) gegenüber der zweiten Magnetseite (S2) befindet und die Mitte der ersten Längsausdehnung (l1) und die Mitte der der zweiten Längsausdehnung (l2) gegenüber voneinander befinden,
**dadurch gekennzeichnet, dass** die Transporteinheit (1)
- an der ersten Magnetseite (S1) in einem ersten Prüfabstand (a1) ausgehend von der Mitte der ersten Längsausdehnung (l1) in Richtung des ersten Endes (l1e) eine magnetische Größe mit einem ersten Wert (w1) aufweist, und an der ersten Magnetseite (S1) im ersten Prüfabstand (a1) ausgehend von der Mitte der ersten Längsausdehnung (l1) in Richtung des ersten Anfangs (l1a) eine magnetische Größe mit einem zweiten Wert (w2), der dem ersten Wert (w1) entspricht, aufweist, **dass**
- die Transporteinheit (1) an der zweiten Magnetseite (S2) in einem zweiten Prüfabstand (a2) ausgehend von der Mitte der zweiten Längsausdehnung (l2) in Richtung des zweiten Endes (l2e) eine magnetische Größe mit einem dritten Wert (w3) aufweist, **und dass**
- die Transporteinheit (1) an der zweiten Magnetseite (S1) im zweiten Prüfabstand (a2) ausgehend von der Mitte der zweiten Längsausdehnung (l2) in Richtung des zweiten Anfangs (l2a) eine magnetische Größe mit einem vierten Wert (w4), der dem dritten Wert (w3) entspricht, aufweist, wobei sich der erste und zweite Wert (w1, w2) von dem dritten und vierten Wert (w3, w4) unterscheiden.

2. Transporteinheit nach 1, **dadurch gekennzeichnet, dass** der erste Prüfabstand (a1) dem zweiten Prüfabstand (a2) entspricht.

3. Transporteinheit Anspruch 2, **dadurch gekennzeichnet, dass** alle Werte der magnetischen Größen entlang der Längsrichtung (x) an der ersten Magnetseite (S1) einen anderen Wert aufweisen, als an der zweiten Magnetseite (S2).

4. Transporteinheit nach einem der Ansprüche 1 bis 3, **dadurch gekennzeichnet, dass** die Werte der magnetischen Größen auf der ersten Magnetseite (S1) symmetrisch um die Mitte der ersten Längsausdehnung (l1) sind, **und dass** die Werte der magnetischen Größen auf der zweiten Magnetseite (S2) symmetrisch um die Mitte der zweiten Längsausdehnung (l2) sind.

5. Transporteinheit (1) für einen Langstatorlinearmotor (2), wobei die Transporteinheit (1)
- eine hinsichtlich einer Längsrichtung (x) seitlich befindliche erste Führungsseite (FS1) aufweist, an der eine führungssymmetrische erste Führungsgruppe (G1) angeordnet ist und
- eine hinsichtlich der Längsrichtung (x) seitlich befindliche erste Magnetseite (S1) aufweist, die sich entlang der Längsrichtung (x) über eine erste Längsausdehnung (l1) von einem ersten Anfang (l1a) bis zu einem ersten Ende (l1e) erstreckt, **dadurch gekennzeichnet, dass**
- die Transporteinheit (1) an der ersten Magnetseite (S1) in einem ersten Prüfabstand (a1) ausgehend von der Mitte der ersten Längsausdehnung (l1) in Richtung des ersten Endes (l1e) eine magnetische Größe mit einem ersten Wert (w1) aufweist, **und dass**
- die Transporteinheit (1) an der ersten Magnetseite (S1) im ersten Prüfabstand (a1) ausgehend von der Mitte der ersten Längsausdehnung (l1) in Richtung des ersten Anfangs (l1a) eine magnetische Größe mit einem zweiten Wert (w2) aufweist, der sich vom ersten Wert (w1) unterscheidet.

6. Transporteinheit (1) für einen Langstatorlinearmotor (2), wobei die Transporteinheit (1)
- eine hinsichtlich einer Längsrichtung (x) seitlich befindliche erste Führungsseite (FS1) aufweist, an der eine erste Führungsgruppe (G1) angeordnet ist,
- eine hinsichtlich der Längsrichtung (x) seitlich befindliche erste Magnetseite (S1) aufweist, die sich entlang der Längsrichtung (x) über eine erste Längsausdehnung (l1) von einem ersten Anfang (l1a) bis zu einem ersten Ende (l1e) erstreckt,
- die Transporteinheit eine der Längsrichtung (x) seitlich befindliche zweiten Führungsseite (FS2) aufweist, an der eine zweite Führungsgruppe (G2) angeordnet ist und
- die Transporteinheit (1) eine hinsichtlich der Längsrichtung (x) seitlich befindliche zweite Magnetseite (S2) aufweist, die sich entlang der Längsrichtung (x) über eine zweite Längsausdehnung (12) von einem zweiten Anfang (l2a) bis zu einem zweiten Ende (l2e) erstreckt, **dadurch gekennzeichnet, dass**
- die erste Führungsgruppe (FG1) und die zweite Führungsgruppe (FG2) führungssymmetrisch und/oder zueinander führungsäquivalent sind, **dass**
die Transporteinheit (1) an der ersten Magnetseite (S1) in einem ersten Prüfabstand (a1) ausgehend von der Mitte der ersten Längsausdehnung (l1) in Richtung des ersten Endes (l1e) eine magnetische Größe mit einem ersten Wert (w1) aufweist, **dass**
- die Transporteinheit (1) an der ersten Magnetseite (S1) im ersten Prüfabstand (a1) ausgehend von der Mitte der ersten Längsausdehnung (l1) in Richtung des ersten Anfangs (l1a) eine magnetische Größe mit einem zweiten Wert (w2) aufweist, der sich vom ersten Wert (w1) unterscheidet, **dass**
- die Transporteinheit (1) an der zweiten Magnetseite (S2) in einem zweiten Prüfabstand (a2) ausgehend von der Mitte der zweiten Längsausdehnung (l2) in Richtung des zweiten Endes (l2e) eine magnetische Größe mit einem dritten Wert (w3) aufweist, **und dass**
- die Transporteinheit (1) an der zweiten Magnetseite (S2) im zweiten Prüfabstand (a2) ausgehend von der Mitte der zweiten Längsausdehnung (l2) in Richtung des zweiten Anfangs (l2a) eine magnetische Größe mit einem vierten Wert (w4) aufweist, der sich vom dritten Wert (w3) unterscheidet.

7. Transporteinheit nach Anspruch 6, **dadurch gekennzeichnet, dass** sich die erste Führungsseite (FS1) gegenüber der zweiten Führungsseite (FS2) befindet **dass** sich die erste Magnetseite (S1) gegenüber der zweiten Magnetseite (S2) befindet und die Mitte der ersten Längsausdehnung (l1) und die Mitte der der zweiten Längsausdehnung (l2) gegenüber voneinander befinden, **dass** die Transporteinheit auf der ersten Magnetseite (S1) an einer Prüfposition (a3) entlang der Längsrichtung (x) eine magnetische Größe mit einem fünften Wert (w5) aufweist, **und dass** die Transporteinheit (1) auf der zweiten Magnetseite (S2) an der Prüfposition (a3) entlang der Längsrichtung (x) eine magnetische Größe mit einem sechsten Wert (w6) aufweist, der sich vom fünften Wert (w5) unterscheidet.

8. Transporteinheit nach Anspruch 7, **dadurch gekennzeichnet, dass** der erste Prüfabstand (a1) dem zweiten Prüfabstand (a2) und der Prüfposition (a3) entspricht.

9. Transporteinheit einem der Ansprüche 7 bis 8, **dadurch gekennzeichnet, dass** sich entlang der Längsrichtung (x) alle Werte der magnetischen Größen auf der ersten Magnetseite (S1) von den Werten der magnetischen Größen auf der zweiten Seite (S2) unterscheiden.

10. Transporteinheit nach einem der Ansprüche 1 bis 9, **dadurch gekennzeichnet, dass** die Werte der magnetischen Größen auf der ersten Magnetseite (S1) asymmetrisch um die Mitte der ersten Längsausdehnung (l1) sind.

11. Transporteinheit nach einem der Ansprüche 1 bis 10, **dadurch gekennzeichnet, dass** die magnetische Größe durch einen magnetischen Widerstand, vorzugsweise einer an der ersten Magnetseite (S1) angebrachten ersten Magnetplatte (P1), bzw. an der zweiten Magnetseite (S2) angebrachten zweiten Magnetplatte (P2), gegeben ist.

12. Transporteinheit nach einem der Ansprüche 1 bis 10, **dadurch gekennzeichnet, dass** an der ersten Magnetseite (S1) eine erste Anzahl k Magnete (M11,...,M1k), bzw. an der zweiten Magnetseite (S1) eine zweite Anzahl l Magnete (M21,...,M2l) angeordnet ist, die jeweils in der Querrichtung (y) mit einer Polung (n,s) versehen sind, wobei die magnetische Größe durch die Polung der ersten Anzahl k Magnete (M11,...,M1k), bzw. der zweiten Anzahl l Magnete (M21,...,M2l) gegeben ist.

13. Langstatorlinearmotor mit zumindest einer Transporteinheit (1) nach einem der Ansprüche 1 bis 12 und mit einer Transportstrecke (20) mit einer ersten Strecken-Führungsgruppe (21) und/oder einer zweiten Strecken-Führungsgruppe (22), die mit der erste Führungsgruppe (G1) und/oder der zweiten Führungsgruppe (G2) zusammenwirkt um die zumindest eine Transporteinheit (1) entlang der Transportstrecke (20) in einer Bewegungsrichtung zu führen.

14. Verfahren zum Bestimmen der Orientierung einer Transporteinheit (1) eines Langstatorlinearmotors (2), wobei die Transporteinheit (1) führungssymmetrisch und/oder führungsäquivalent ist, **dadurch gekennzeichnet, dass** an einer hinsichtlich der Längsrichtung (x) seitlich befindlichen Magnetseite (S1, S2) an einem Prüfpunkt (P) ein Ist-Wert (w) einer magnetischen Prüfgröße ermittelt und mit einem Referenzwert (w0) verglichen wird, **und dass** bei Nicht-Übereinstimmung des Ist-Werts (w) mit dem Referenzwert (w) auf eine Falschorientierung der Transporteinheit (1) geschlossen wird.

15. Verfahren nach Anspruch 14, **dadurch gekennzeichnet, dass** als magnetische Prüfgröße eine Polung (n, s) eines Magneten (M11,...,M1k, M21,...,M2l), der Transporteinheit (1) ermittelt wird.
